# EUROPEAN PATENT APPLICATION

(11) **EP 4 560 989 A1**
(43) Date of publication of application: **28.05.2025**
(21) Application number: 23862022.3
(22) Date of filing: 30.06.2023
(51) Int. Cl.: H04L 12/46, H04L 9/40

(54) **NETWORK ISOLATION METHOD AND SYSTEM, AND RELATED DEVICE**

(30) Priority: 06.09.2022 CN 202211084978
(71) Applicant: Huawei Technologies Co., Ltd., Shenzhen, Guangdong 518129 (CN)
(72) Inventor: XIONG, Liudong, Shenzhen, Guangdong 518129 (CN); HAN, Zhaojiao, Shenzhen, Guangdong 518129 (CN)
(74) Representative: Huawei European IPR
(86) International application number: PCT/CN2023/104840
(87) International publication number: WO 2024/051321

(57) **Abstract**

Disclosed are a network isolation method and system, and a related device, to reduce complexity of network isolation. The system includes a source network interface card, a destination network interface card, and a network device. The source network interface card is configured to process to-be-sent data to obtain a target packet, where the target packet includes a single-layer packet header, the packet header includes a first network partition identifier added by the source network interface card, and the first network partition identifier is a network partition identifier configured for the source network interface card. The source network interface card is further configured to send the target packet to the destination network interface card via the network device. The network device is configured to forward the target packet to the destination network interface card. The destination network interface card is configured to: obtain the first network partition identifier in the packet header after receiving the target packet, and discard the target packet when the first network partition identifier is different from a second network partition identifier, where the second network partition identifier is a network partition identifier configured for the destination network interface card.

## Description

This application claims priority to Chinese Patent Application No. 202211084978.1, filed with the China National Intellectual Property Administration on September 6, 2022 and entitled "NETWORK ISOLATION METHOD AND SYSTEM, AND RELATED DEVICE", which is incorporated herein by reference in its entirety.

### TECHNICAL FIELD

This application relates to the field of computer network technologies, and in particular, to a network isolation method and system, and a related device.

### BACKGROUND

Network isolation is a technology that implements data exchange by disconnecting two or more networks. Network isolation is mainly used to isolate harmful network security threats, to ensure that resources such as data information are shared in a secure environment. Network isolation technologies are generally classified into physical isolation and logical isolation. Physical isolation means that physical devices and physical connection lines are completely isolated in networks by establishing at least a plurality of hardware network systems. Implementation costs are high and configuration is inflexible. Logical isolation means that different organizations/users cannot communicate with each other by configuring isolation rules statically or dynamically on a same physical network. Costs are low and configuration is flexible. Currently, logical isolation is widely used in scenarios such as data centers, enterprises, and campuses by virtue of its low costs, flexible configuration, and other features.

A virtual extensible local area network (virtual extensible LAN, VXLAN) is a widely used logical isolation technology currently, in which a logical VXLAN tunnel is established between a source end and a destination end. A VXLAN tunnel endpoint (VXLAN tunnel endpoint, VTEP) completely encapsulates an original Ethernet packet sent by the source end into a UDP packet, and encapsulates the UDP packet with an IP packet header and an Ethernet packet header of a physical network at an outer layer. When a packet enters a VXLAN tunnel, outer tunnel information is found through matching based on a feature of the original Ethernet packet, so as to implement isolation and control.

However, in the VXLAN, the VTEP needs to encapsulate a packet into a packet having two layers of network headers, or decapsulate a packet having two layers of network headers. Implementation is complex, and a processing delay is long. Consequently, packet forwarding performance is poor.

### SUMMARY

This application provides a network isolation method and system, and a related device, to reduce complexity and a processing delay of large-scale IP network isolation and improve network isolation performance while ensuring security and reliability of network isolation.

A first aspect provides a network isolation system. The system includes a source network interface card connected to a source device, a destination network interface card connected to a destination device, and a network device. The source network interface card and the destination network interface card are connected over an IP network, and the network device is a device in the IP network. The source network interface card is configured to process to-be-sent data to obtain a target packet, where the target packet includes a single-layer packet header, the packet header includes a first network partition identifier added by the source network interface card, and the first network partition identifier is a network partition identifier configured for the source network interface card. The source network interface card is further configured to send the target packet to the destination network interface card via the network device. The network device is configured to forward the target packet to the destination network interface card based on address information in the packet header. The destination network interface card is configured to: obtain the first network partition identifier in the packet header of the target packet after receiving the target packet, and discard the target packet when the first network partition identifier is different from a second network partition identifier, where the second network partition identifier is a network partition identifier configured for the destination network interface card.

The source network interface card adds the first network partition identifier to the packet header of the target packet, and the network device reserves the first network partition identifier when forwarding the target packet, so that the first network partition identifier is carried in an end-to-end manner. In this way, after receiving the target packet, the destination network interface card can determine whether to discard the target packet based on whether the first network partition identifier in the target packet is consistent with the second network partition identifier configured for the destination network interface card. This implements end-to-end network isolation. The target packet includes only the single-layer packet header, and therefore a packet format is simple. An operation of adding the first network partition identifier to the packet header by the network interface card is simple, and efficiency is high. Because the network device does not need to add, to the target packet, an isolated field or a tunnel encapsulation header used for network isolation, the network device may forward the target packet carrying the first network partition identifier as a normal IP packet. This can improve forwarding performance of the network device, reduce a processing delay of the target packet, and reduce complexity of network isolation. In addition, the network interface card works at a physical layer and a data link layer, the network partition identifier configured for the network interface card is invisible to a tenant, and the tenant cannot tamper with the network partition identifier. This ensures security and reliability of the network partition identifier. Therefore, network isolation is implemented based on the network partition identifier, and security of network isolation can be ensured.

In a possible implementation, the to-be-sent data is non-encapsulated application data. The source network interface card is configured to encapsulate, for the to-be-sent data, the packet header including the first network partition identifier, to obtain the target packet. When the to-be-sent data is only application data and the packet header is not encapsulated for the to-be-sent data, the source network interface card encapsulates the packet header for the to-be-sent data, and the packet header includes the first network partition identifier. In other words, when encapsulating the packet header for the to-be-sent data, the network interface card synchronously completes addition of the first network partition identifier. An operation is simple. In addition, complex tunnel matching and encapsulation are not required for implementing network isolation. This reduces the processing delay of the packet.

In a possible implementation, the to-be-sent data includes an original packet header, and the original packet header does not include the first network partition identifier. The source network interface card is configured to insert the first network partition identifier into the original packet header, to obtain the target packet. When the to-be-sent data already includes the original packet header, the network interface card adds the first network partition identifier to the original packet header, to obtain the packet header including the first network partition identifier, so as to obtain the target packet. The network interface card does not need to perform complex tunnel matching and encapsulation required for implementing network isolation, and therefore the processing delay is short.

In a possible implementation, the packet header includes a link layer header and an IP network header, and the first network partition identifier is located in the link layer header or the IP network header. Therefore, the destination network interface card may obtain the first network partition identifier without decapsulating the target packet. This can increase a speed at which the destination network interface card identifies whether the target packet is a packet not allowed to pass through.

In a possible implementation, the first network partition identifier is not used for forwarding of the target packet. In other words, the network device only needs to perform forwarding based on the address information in the packet header of the target packet. The network device does not need to create a routing entry for forwarding related to the first network partition identifier and does not need to perform table lookup based on the first network partition identifier for forwarding, and the network device only needs to forward the target packet whose packet header carries the first network partition identifier as the normal IP packet. This can improve forwarding performance of the network device.

In a possible implementation, the first network partition identifier and the second network partition identifier are invisible to the source device and the destination device. Therefore, a tenant in the resource device and a tenant in the destination device cannot obtain the first network partition identifier and the second network partition identifier. This ensures confidentiality and security of the network partition identifiers, and can ensure security and reliability of network isolation based on the network partition identifiers.

In a possible implementation, the system further includes a network management device, and the network device includes a first edge network device connected to the source network interface card and a second edge network device connected to the destination network interface card. The network management device is specifically configured to: send the first network partition identifier to the first edge network device, and send the second network partition identifier to the second edge network device. The first edge network device is configured to send a first control message to the source network interface card, where the first control message includes the first network partition identifier. The second edge network device is configured to send a second control message to the destination network interface card, where the second control message includes the second network partition identifier. The source network interface card is further configured to configure the first network partition identifier based on the first control message. The destination network interface card is further configured to configure the second network partition identifier based on the second control message. On a network side, trusted configuration is performed on the network partition identifiers of the source network interface card and the destination network interface card, and the network partition identifiers are not perceived by the tenants. This can ensure confidentiality and security of the network partition identifiers, and ensure security and reliability of network isolation based on the network partition identifiers.

In a possible implementation, neither the first control message nor the second control message includes an IP address. Therefore, the network interface card can identify the control message, and complete configuration of the network partition identifier of the network interface card based on the control message, but does not send the control message to the end device as a normal IP packet. Consequently, the network partition identifier is exposed, and the network interface card cannot complete configuration of the network partition identifier.

In a possible implementation, the destination network interface card is further configured to remove the first network partition identifier from the target packet when the first network partition identifier is the same as the second network partition identifier. The destination network interface card is further configured to send, to the destination device, the target packet from which the first network partition identifier is removed. That the first network partition identifier is the same as the second network partition identifier indicates that the destination network interface card and the source network interface card belong to a same network partition, and communication between the source device and the destination device is allowed. Before sending the target packet to the destination device, the destination network interface card needs to remove the first network partition identifier from the packet header of the target packet, to avoid a case in which the destination device cannot identify the packet and the first network partition identifier is exposed because the packet carrying the first network partition identifier is sent to the destination device. This ensures confidentiality and security of the network partition identifier, and ensures security and reliability of network isolation based on the network partition identifier.

In a possible implementation, the network device includes the second edge network device, and a first port of the second edge network device is connected to the destination network interface card. The second edge network device is configured to: receive the target packet, and obtain the first network partition identifier in the packet header. The second edge network device is further configured to: forward the target packet to the destination network interface card through the first port when the first network partition identifier is a network partition identifier allowed to pass through the first port, or discard the target packet when the first network partition identifier is not a network partition identifier allowed to pass through the first port. The second edge network device screens the target packet sent to the destination network interface card, to assist the destination network interface card in filtering out abnormal traffic. This avoids a case in which normal working of the destination network interface card is affected because the abnormal traffic attacks the destination network interface card and occupies bandwidth of the destination network interface card.

In a possible implementation, the network device includes the first edge network device, and a second port of the first edge network device is connected to the source network interface card. The first edge network device is configured to: receive the target packet, and obtain the first network partition identifier in the packet header. The first edge network device is further configured to: forward the target packet to the destination network interface card when the first network partition identifier is a network partition identifier allowed to pass through the second port, or discard the target packet when the first network partition identifier is not a network partition identifier allowed to pass through the second port. The first edge network device screens a packet from the second port, to shield an abnormal target packet from the end device, and prevent the abnormal target packet from being forwarded in the IP network. This improves security of the IP network.

In a possible implementation, the source device is a physical machine, and the source network interface card is a physical network interface card; or the source device is a virtual device, and the source network interface card is a virtual function VF network interface card or a physical function PF network interface card that is directly connected to the virtual device, where the virtual device is a virtual machine or a container; and the destination device is a physical machine, and the destination network interface card is a physical network interface card; or the destination device is a virtual device, and the destination network interface card is a VF network interface card or a PF network interface card that is directly connected to the virtual device. The source network interface card uniquely corresponds to one end device, to implement precise isolation of end devices in various forms, and to be applied to a plurality of network isolation scenarios.

In a possible implementation, the source network interface card is a network interface card that implements packet receiving and sending and first network partition identifier addition processing based on a physical resource of a physical network interface card, and the destination network interface card is a network interface card that implements packet receiving and sending and first network partition identifier removal processing based on a physical resource of a physical network interface card.

A second aspect provides a network interface card. The network interface card includes a storage module, a transceiver module, and a processing module. The storage module is configured to store a second network partition identifier configured for the network interface card. The transceiver module is configured to receive a target packet forwarded by a network device in an IP network, where the target packet includes a single-layer packet header, the packet header includes a first network partition identifier added by a network interface card that sends the target packet, and the first network partition identifier is a network partition identifier configured for the network interface card that sends the target packet. The processing module is configured to: obtain the first network partition identifier in the packet header, and discard the target packet when the first network partition identifier is different from the second network partition identifier.

In a possible implementation, the first network partition identifier and the second network partition identifier are invisible to an end device connected to the transceiver module.

In a possible implementation, the processing module is further configured to remove the first network partition identifier from the packet header of the target packet when the first network partition identifier is the same as the second network partition identifier. The transceiver module is further configured to send, to the end device connected to the transceiver module, the target packet from which the first network partition identifier is removed.

In a possible implementation, the transceiver module is further configured to receive a second control message from a second edge network device in the network device, where the second edge network device is a device connected to the transceiver module, the second control message includes the second network partition identifier, and the second control message is generated after the second edge network device receives the second network partition identifier from a network management device. The processing module is further configured to configure the second network partition identifier based on the second control message.

In a possible implementation, the network interface card is a physical network interface card, and the end device connected to the network interface card is a physical machine; or the network interface card is a VF network interface card or a PF network interface card that is directly connected to the end device, and the end device is a virtual machine or a container.

In a possible implementation, the network interface card is a network interface card that implements packet receiving and sending and first network partition identifier removal processing based on a physical resource of a physical network interface card.

A third aspect provides a network interface card. The network interface card includes a storage module, a transceiver module, and a processing module. The storage module is configured to store a first network partition identifier configured for the network interface card. The processing module is configured to process to-be-sent data to obtain a target packet, where the target packet includes a single-layer packet header, and the packet header includes the first network partition identifier added by the processing module. The transceiver module is configured to send the target packet via a network device in an IP network, so that a network interface card that receives the target packet discards the target packet when a second network partition identifier is different from the first network partition identifier in the packet header of the target packet, where the second network partition identifier is a network partition identifier configured for the network interface card that receives the target packet.

In a possible implementation, the second network partition identifier is located in a link layer header, and the to-be-sent data is non-encapsulated application data. The processing module is configured to encapsulate, for the to-be-sent data, the packet header including the first network partition identifier, to obtain the target packet.

In a possible implementation, the to-be-sent data includes an original packet header, and the original packet header does not include the first network partition identifier. The processing module is configured to insert the first network partition identifier into the original packet header, to obtain the target packet.

In a possible implementation, the packet header of the target packet includes the link layer header and an IP network header, and the first network partition identifier is located in the link layer header or the IP network header.

In a possible implementation, the transceiver module is further configured to receive a control message from an edge network device in the network device, where the edge network device is a network device connected to the transceiver module, the control message includes the first network partition identifier, and the control message is generated after the edge network device receives the first network partition identifier from a network management device. The processing module is further configured to configure the first network partition identifier based on the control message.

In a possible implementation, the network interface card is a physical network interface card, and the end device connected to the network interface card is a physical machine; or the network interface card is a VF network interface card or a PF network interface card that is directly connected to the end device, and the end device is a virtual machine or a container.

In a possible implementation, the network interface card is a network interface card that implements packet receiving and sending and first network partition identifier addition processing based on a physical resource of a physical network interface card.

A fourth aspect provides a network isolation method. The method includes: A destination network interface card receives a target packet forwarded by a network device in an IP network, where the target packet is obtained by processing to-be-sent data by a source network interface card, the target packet includes a single-layer packet header, the packet header includes a first network partition identifier added by the source network interface card, and the first network partition identifier is a network partition identifier configured for the source network interface card; the destination network interface card obtains the first network partition identifier in the packet header of the target packet; and the destination network interface card discards the target packet when the first network partition identifier is different from a second network partition identifier, where the second network partition identifier is a network partition identifier configured for the destination network interface card.

In a possible implementation, the packet header includes a link layer header and an IP network header, and the first network partition identifier is located in the link layer header or the IP network header.

In a possible implementation, the first network partition identifier and the second network partition identifier are invisible to a source device and a destination device, the source device is an end device connected to the source network interface card, and the destination device is an end device connected to the destination network interface card.

In a possible implementation, the method further includes: The destination network interface card receives a second control message from a second edge network device in the network device, where the second edge network device is a device connected to the destination network interface card, the second control message includes the second network partition identifier, and the second control message is generated after the second edge network device receives the second network partition identifier from a network management device; and the destination network interface card completes configuration of the second network partition identifier based on the second control message.

In a possible implementation, the second control message does not include an IP address.

In a possible implementation, the method further includes: The destination network interface card removes the first network partition identifier from the target packet when the first network partition identifier is the same as the second network partition identifier; and the destination network interface card sends, to the destination device connected to the destination network interface card, the target packet from which the first network partition identifier is removed.

In a possible implementation, the destination network interface card is a physical network interface card, and the destination device connected to the destination network interface card is a physical machine; or the destination network interface card is a VF network interface card or a PF network interface card that is directly connected to the destination device, and the destination device is a virtual machine or a container.

In a possible implementation, the destination network interface card is a network interface card that implements packet receiving and sending and first network partition identifier removal processing based on a physical resource of a physical network interface card.

A fifth aspect provides a network isolation method. The method includes: A source network interface card processes to-be-sent data to obtain a target packet, where the target packet includes a single-layer packet header, the packet header includes a first network partition identifier added by the source network interface card, and the first network partition identifier is a network partition identifier configured for the source network interface card; and the source network interface card sends the target packet to a destination network interface card via a network device in an IP network, so that the destination network interface card obtains the first network partition identifier in the packet header of the target packet after receiving the target packet, and discards the target packet when the first network partition identifier is different from a second network partition identifier, where the second network partition identifier is a network partition identifier configured for the destination network interface card.

In a possible implementation, the to-be-sent data is non-encapsulated application data. The source network interface card encapsulates, for the to-be-sent data, the packet header including the first network partition identifier, to obtain the target packet.

In a possible implementation, the to-be-sent data includes an original packet header, and the original packet header does not include the first network partition identifier; and the source network interface card is configured to insert the first network partition identifier into the original packet header, to obtain the target packet.

In a possible implementation, the packet header includes a link layer header and an IP network header, and the first network partition identifier is located in the link layer header or the IP network header.

In a possible implementation, the first network partition identifier and the second network partition identifier are invisible to a source device and a destination device, the source device is an end device connected to the source network interface card, and the destination device is an end device connected to the destination network interface card.

In a possible implementation, the method further includes: The source network interface card receives a first control message from a first edge network device in the network device, where the first edge network device is a device connected to the source network interface card, the first control message includes the first network partition identifier, and the first control message is generated after the first edge network device receives the first network partition identifier from a network management device; and the source network interface card completes configuration of the first network partition identifier based on the first control message.

In a possible implementation, the first control message does not include an IP address.

In a possible implementation, the source network interface card is a physical network interface card, and the source device connected to the source network interface card is a physical machine; or the source device is a virtual device, and the source network interface card is a VF network interface card or a PF network interface card that is directly connected to the virtual device, where the virtual device is a virtual machine or a container.

In a possible implementation, the source network interface card is a network interface card that implements packet receiving and sending and first network partition identifier addition processing based on a physical resource of a physical network interface card, and the destination network interface card is a network interface card that implements packet receiving and sending and first network partition identifier removal processing based on a physical resource of a physical network interface card.

A sixth aspect provides a network isolation method. The method includes: A network device receives a target packet sent by a source network interface card, where the target packet is obtained by processing to-be-sent data by the source network interface card, the target packet includes a single-layer link layer header and a single-layer IP network header, the packet header includes a first network partition identifier added by the source network interface card, and the first network partition identifier is a network partition identifier configured for the source network interface card; and the network device forwards the target packet to a destination network interface card based on destination address information in the packet header, where the network device reserves the first network partition identifier in the packet header when forwarding the target packet, so that the destination network interface card obtains the first network partition identifier from the packet header after receiving the target packet and discards the target packet when the first network partition identifier is different from a second network partition identifier, where the second network partition identifier is a network partition identifier configured for the destination network interface card.

In a possible implementation, the first network partition identifier is not used for forwarding of the target packet.

In a possible implementation, the packet header includes the link layer header and the IP network header, and the first network partition identifier is located in the link layer header or the IP network header.

In a possible implementation, the network device includes a first edge network device connected to the source network interface card and a second edge network device connected to the destination network interface card. The method further includes: The first edge network device obtains the first network partition identifier from a network management device; the first edge network device sends a first control message to the source network interface card, where the first control message includes the first network partition identifier, so that the source network interface card configures the first network partition identifier based on the first control message; the second edge network device obtains the second network partition identifier from the network management device; and the second edge network device sends a second control message to the destination network interface card, where the second control message includes the second network partition identifier, so that the destination network interface card configures the second network partition identifier based on the second control message.

In a possible implementation, neither the first control message nor the second control message includes an IP address.

In a possible implementation, the network device includes the second edge network device connected to the destination network interface card, and a first port of the second edge network device is connected to the destination network interface card. The method further includes: The second edge network device receives the target packet, and obtains the first network partition identifier in the packet header; and the second edge network device forwards the target packet to the destination network interface card through the first port when the first network partition identifier is a network partition identifier allowed to pass through the first port, or discards the target packet when the first network partition identifier is not a network partition identifier allowed to pass through the first port.

In a possible implementation, the network device includes the first edge network device connected to the source network interface card, and a second port of the first edge network device is connected to the source network interface card. The method further includes: The first edge network device receives the target packet, and obtains the first network partition identifier in the packet header; and the first edge network device forwards the target packet to the destination network interface card when the first network partition identifier is a network partition identifier allowed to pass through the second port, or discards the target packet when the first network partition identifier is not a network partition identifier allowed to pass through the second port.

In a possible implementation, the source device is a physical machine, and the source network interface card is a physical network interface card; or the source device is a virtual device, and the source network interface card is a virtual function VF network interface card or a physical function PF network interface card that is directly connected to the virtual device, where the virtual device is a virtual machine or a container; and the destination device is a physical machine, and the destination network interface card is a physical network interface card; or the destination device is a virtual device, and the destination network interface card is a VF network interface card or a PF network interface card that is directly connected to the virtual device.

In a possible implementation, the source network interface card is a network interface card that implements packet receiving and sending and first network partition identifier addition processing based on a physical resource of a physical network interface card, and the destination network interface card is a network interface card that implements packet receiving and sending and first network partition identifier removal processing based on a physical resource of a physical network interface card.

A seventh aspect provides a network isolation method. The method includes: A source network interface card processes to-be-sent data to obtain a target packet, where the target packet includes a single-layer packet header, the packet header includes a first network partition identifier added by the source network interface card, and the first network partition identifier is a network partition identifier configured for the source network interface card; the source network interface card sends the target packet to a destination network interface card via a network device; the network device forwards the target packet to the destination network interface card; and the destination network interface card obtains the first network partition identifier in the packet header after receiving the target packet, and discards the target packet when the first network partition identifier is different from a second network partition identifier, where the second network partition identifier is a network partition identifier configured for the destination network interface card.

In a possible implementation, the first network partition identifier is not used for forwarding of the target packet.

In a possible implementation, the network device includes a first edge network device connected to the source network interface card, and a second edge network device connected to the destination network interface card. The method further includes: The first edge network device obtains the first network partition identifier from a network management device; the first edge network device sends a first control message to the source network interface card, where the first control message includes the first network partition identifier; and the source network interface card configures the first network partition identifier based on the first control message; the second edge network device obtains the second network partition identifier from the network management device; the second edge network device sends a second control message to the destination network interface card, where the second control message includes the second network partition identifier; and the destination network interface card configures the second network partition identifier based on the second control message.

In a possible implementation, neither the first control message nor the second control message includes an IP address.

In a possible implementation, the network device includes the second edge network device connected to the destination network interface card, and a first port of the second edge network device is connected to the destination network interface card. The method further includes: The second edge network device receives the target packet, and obtains the first network partition identifier in the packet header; and the second edge network device forwards the target packet to the destination network interface card through the first port when the first network partition identifier is a network partition identifier allowed to pass through the first port, or discards the target packet when the first network partition identifier is not a network partition identifier allowed to pass through the first port.

In a possible implementation, the network device includes the first edge network device connected to the source network interface card, and a second port of the first edge network device is connected to the source network interface card. The method further includes: The first edge network device receives the target packet, and obtains the first network partition identifier in the packet header; and the first edge network device forwards the target packet to the destination network interface card when the first network partition identifier is a network partition identifier allowed to pass through the second port, or discards the target packet when the first network partition identifier is not a network partition identifier allowed to pass through the second port.

In a possible implementation, the to-be-sent data is non-encapsulated application data. The source network interface card is configured to encapsulate, for the to-be-sent data, the packet header including the first network partition identifier, to obtain the target packet.

In a possible implementation, the to-be-sent data includes an original packet header, and the original packet header does not include the first network partition identifier. The source network interface card is configured to insert the first network partition identifier into the original packet header, to obtain the target packet.

In a possible implementation, the packet header includes a link layer header and an IP network header, and the first network partition identifier is located in the link layer header or the IP network header.

In a possible implementation, the first network partition identifier and the second network partition identifier are invisible to a source device connected to the source network interface card and a destination device connected to the destination network interface card.

In a possible implementation, the method further includes: The destination network interface card removes the first network partition identifier from the target packet when the first network partition identifier is the same as the second network partition identifier; and the destination network interface card sends, to the destination device connected to the destination network interface card, the target packet from which the first network partition identifier is removed.

In a possible implementation, the source device is a physical machine, and the source network interface card is a physical network interface card; or the source device is a virtual device, and the source network interface card is a virtual function VF network interface card or a physical function PF network interface card that is directly connected to the virtual device, where the virtual device is a virtual machine or a container; and the destination device is a physical machine, and the destination network interface card is a physical network interface card; or the destination device is a virtual device, and the destination network interface card is a VF network interface card or a PF network interface card that is directly connected to the virtual device.

In a possible implementation, the source network interface card is a network interface card that implements packet receiving and sending and first network partition identifier addition processing based on a physical resource of a physical network interface card, and the destination network interface card is a network interface card that implements packet receiving and sending and first network partition identifier removal processing based on a physical resource of a physical network interface card.

An eighth aspect provides a network device. The network device includes a transceiver module. The transceiver module is configured to receive a target packet sent by a source network interface card, where the target packet is obtained by processing to-be-sent data by the source network interface card, the target packet includes a single-layer packet header, the packet header includes a first network partition identifier added by the source network interface card, and the first network partition identifier is a network partition identifier configured for the source network interface card. The transceiver module is further configured to forward the target packet to a destination network interface card based on destination address information in the packet header, where the network device reserves the first network partition identifier in the packet header when forwarding the target packet, so that the destination network interface card obtains the first network partition identifier from the packet header after receiving the target packet and discards the target packet when the first network partition identifier is different from a second network partition identifier, where the second network partition identifier is a network partition identifier configured for the destination network interface card.

In a possible implementation, the first network partition identifier is not used for forwarding of the target packet.

In a possible implementation, the network device is a first edge network device connected to the source network interface card, and the first edge network device further includes a processing module. The processing module is configured to obtain the first network partition identifier from a network management device. The processing module is configured to generate a first control message based on the first network partition identifier, where the first control message includes the first network partition identifier. The transceiver module is configured to send the first control message to the source network interface card, so that the source network interface card configures the first network partition identifier based on the first control message.

In a possible implementation, the network device is a second edge network device connected to the destination network interface card, and the second edge network device further includes a processing module. The processing module is configured to obtain the first network partition identifier from a network management device. The processing module is configured to generate a second control message based on the second network partition identifier, where the second control message includes the second network partition identifier. The transceiver module is configured to send the second control message to the source network interface card, so that the destination network interface card configures the second network partition identifier based on the second control message.

In a possible implementation, neither the first control message nor the second control message includes an IP address.

In a possible implementation, the network device is the first edge network device connected to the source network interface card, and the first edge network device further includes the processing module. The processing module is configured to obtain the first network partition identifier in the packet header. The processing module is configured to: allow the transceiver module to forward the target packet to the destination network interface card when the first network partition identifier is a network partition identifier allowed to pass through, or discard the target packet when the first network partition identifier is not a network partition identifier allowed to pass through.

In a possible implementation, the network device is the second edge network device connected to the destination network interface card, and the second edge network device further includes the processing module. The processing module is configured to obtain the first network partition identifier in the packet header. The processing module is configured to: allow the transceiver module to forward the target packet to the destination network interface card when the first network partition identifier is a network partition identifier allowed to pass through, or discard the target packet when the first network partition identifier is not a network partition identifier allowed to pass through.

In a possible implementation, the packet header includes a link layer header and an IP network header, and the first network partition identifier is located in the link layer header or the IP network header.

A ninth aspect provides a network device. The network device includes a processor and a physical port. The processor is connected to the physical port, the physical port is configured to receive and send a target packet, and the processor is configured to execute instructions, so that the network device performs the method in any one of the sixth aspect or the possible implementations of the sixth aspect.

A tenth aspect provides a network interface card. The network interface card includes a processor and a physical network port. The processor is connected to the physical network port, the physical network port is configured to receive and send a target packet, and the processor is configured to perform the method in any one of the fourth aspect or the possible implementations of the fourth aspect, or any one of the fifth aspect or the possible implementations of the fifth aspect.

An eleventh aspect provides a computer device. The computer device includes a processor, a memory, a communication bus, and the network interface card in any possible implementation of the second aspect, the third aspect, or the ninth aspect. The processor, the memory, and the network interface card are connected to each other through the communication bus.

A twelfth aspect provides a computer-readable storage medium. The computer-readable storage medium includes computer program instructions. When the computer program instructions are executed by a network interface card, the network interface card performs the method in any one of the fourth aspect or the possible implementations of the fourth aspect, or any one of the fifth aspect or the possible implementations of the fifth aspect.

A thirteenth aspect provides a computer-readable storage medium, including computer program instructions. When the computer program instructions are executed by a network device, the network device performs the method in any one of the sixth aspect or the possible implementations of the sixth aspect.

A fourteenth aspect provides a structure of a packet. The structure of the packet includes a single-layer packet header and a payload. The packet header includes a link layer header and an IP network header. The packet header includes a network partition identifier field, the network partition identifier field is used to carry a first network partition identifier configured for a source network interface card that sends the packet, and the first network partition identifier is used to discard the packet when a destination network interface card that receives the packet determines that the first network partition identifier in the link layer header or the IP network header is different from a second network partition identifier configured for the destination network interface card. The first network partition identifier is reserved during network transmission, and is carried with the packet in an end-to-end manner, so that the first network partition identifier can be used for end-to-end network isolation.

In a possible implementation, the first network partition identifier is further used to allow the packet to pass through when the destination network interface card that receives the packet determines that the first network partition identifier in the link layer header or the IP network header is the same as the second network partition identifier configured for the destination network interface card.

In a possible implementation, the IP network header is an IPv6 network header, and the network partition identifier field is located in an IPv6 extension header of the IPv6 network header.

In a possible implementation, a length of the network partition identifier field is greater than 12 bits. Thus, there may be sufficient network partition identifiers for large-scale IP network isolation.

### BRIEF DESCRIPTION OF DRAWINGS

FIG. 1 is a diagram of a network architecture of a data center;
FIG. 2 is a diagram of a format of a VXLAN packet;
FIG. 3 is a diagram of a structure of an embodiment of a network isolation system according to this application;
FIG. 4 is a diagram of a structure of another embodiment of a network isolation system according to this application;
FIG. 5 is a schematic flowchart of an embodiment of a network isolation method according to this application;
FIG. 6 is a diagram of a structure of a target packet according to this application;
FIG. 7 is a diagram of a structure of another target packet according to this application;
FIG. 8 is a schematic flowchart of a second embodiment of a network isolation method according to this application;
FIG. 9 is a diagram of an application scenario of a network isolation method according to this application;
FIG. 10 is a diagram of another application scenario of a network isolation method according to this application;
FIG. 11 is a diagram of another application scenario of a network isolation method according to this application;
FIG. 12 is a diagram of a structure of an embodiment of a network interface card according to this application;
FIG. 13 is a diagram of a structure of another embodiment of a network interface card according to this application;
FIG. 14 is a diagram of a structure of an embodiment of a network device according to this application;
FIG. 15 is a diagram of a structure of another embodiment of a network device according to this application;
FIG. 16 is a diagram of a structure of another embodiment of a network interface card according to this application; and
FIG. 17 is a diagram of a structure of an embodiment of a computer device according to this application.

### DESCRIPTION OF EMBODIMENTS

This application provides a network isolation method and system, and a related device, to reduce complexity and a processing delay of large-scale IP network isolation and improve network isolation performance while ensuring security and reliability of network isolation.

A network connects different computer devices (hosts) via network devices and lines, to provide strong support for information transfer and resource sharing between the different computer devices. In a shared network, computer devices connected to a same physical network may access each other, and a broadcast packet sent by a computer device can be received by all computer devices in the same physical network. As a result, the computer device may be maliciously accessed or attacked by another computer device, causing information leakage or a fault of the computer device. In addition, when a large quantity of broadcast packets are transmitted over the network, a large amount of network bandwidth is occupied, affecting running of normal services in the network. Therefore, network isolation is required for the network, to ensure security and reliable running of the network.

Network isolation is to divide network resources or computer devices on a physical network into a plurality of small logical networks according to a specific principle. For example, in a data center network, logical networks are obtained through division based on tenants or functions; in a campus network, logical networks are obtained through division based on enterprises; and in an enterprise network, logical networks are obtained through division based on departments. Computer devices in a same logical network can directly communicate with each other, but computer devices in different logical networks cannot directly communicate with each other. Data flows across logical networks need to be forwarded by a layer-3 gateway, to reduce a risk of information leakage caused by a computing device in a logical network being attacked or accessed by the computing device in another logical network, and suppress a broadcast storm caused by propagation of excessive broadcast packets in a network.

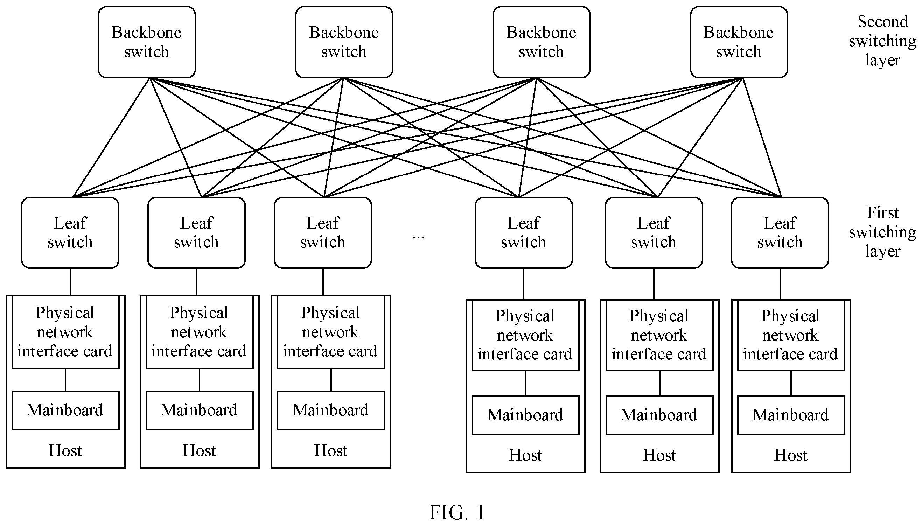

Network isolation of a data center is used as an example for description. FIG. 1 is a diagram of a network architecture of the data center. The network architecture of the data center in FIG. 1 uses a two-layer spine-leaf architecture as an example. The network architecture of the data center may alternatively be a two-layer or three-layer tree/fat-tree architecture, a three-layer or multi-layer spine-leaf architecture, or the like. This is not limited herein.

A data center network includes a plurality of hosts and a plurality of network devices. The network devices are connected through cables to form the network. Each host accesses the network via an edge network device of each of the plurality of network devices, so that the hosts can communicate with each other over the network. In FIG. 1, based on functions of the network devices, the network devices may be classified into network devices at a first switching layer and network devices at a second switching layer. The network device at the first switching layer is an access device, which may also be referred to as an edge network device, and is configured to connect to at least one host. The network device at the first switching layer is, for example, a leaf switch. The network device at the second switching layer is a core device, is connected to a plurality of network devices at the first switching layer, and is configured to implement layer-3 traffic forwarding in the same data center or between the same data center and an external network. The network device at the second switching layer is, for example, a backbone switch.

At least one physical network interface card is disposed in the host. For example, the physical network interface card may be used as a PCIe slot in which a peripheral component interconnect express (peripheral component interconnect express, PCIe) terminal device is inserted into a mainboard of the host through a PCIe interface. The mainboard includes hardware such as a central processing unit and a memory, and is configured to provide a computing resource, a storage resource, and the like. In this way, an operating system, an application, and the like can run based on the hardware on the mainboard. A hardware resource on the mainboard may further be provided for a virtual instance for use. The virtual instance is, for example, a virtual machine, a container, or a bare metal server. The physical network interface card is a physical interface between the host and a transmission medium like an optical fiber, a twisted pair, or a coaxial cable. The physical network interface card is connected to a port of the edge network device through the transmission medium, to implement a connection between the host and the edge network device through the physical network interface card. The physical network interface card may also be referred to as a network interface card (network interface card, NIC) or a network adapter (network adapter). Basic functions of the physical network interface card include data frame encapsulation and decapsulation, media access control, data buffering, and the like.

The host may be virtualized into a plurality of virtual instances such as virtual machines or containers. Computing resources in the data center may be shared by a plurality of tenants at a granularity of virtual machines, containers, physical machines, or the like for use. Therefore, one host may belong to a plurality of tenants, and virtual machines, containers, bare metal servers, or physical machines of one tenant may be distributed on different hosts in the data center. For example, a plurality of services are further deployed in the data center, for example, artificial intelligence (artificial intelligence, AI) model training, AI inference, searching, and big data analysis. To improve service performance, usually, the services are dispersedly deployed on different hosts, virtual machines, or containers in the data center. Based on the same data center network, virtual machines, containers, bare metal servers, or physical hosts of a same tenant or service can communicate with each other. Networks of different tenants or services need to be isolated.

Currently, in the data center, networks are isolated over a VXLAN. A VXLAN isolation principle is as follows.

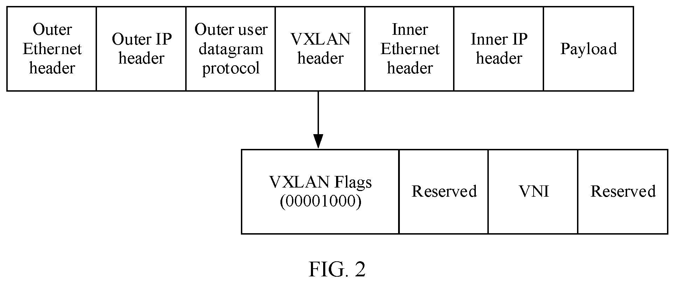

FIG. 2 is a diagram of a format of a VXLAN packet. To implement network isolation and dynamic virtual machine migration, the VXLAN packet includes two layers of packet headers, that is, a packet header of an inner packet (original packet) and an encapsulated outer tunnel encapsulation header. In the VXLAN packet, the inner packet is encapsulated in a data part (payload) of a UDP packet, and the data part of the UDP packet carries a VXLAN header, an inner Ethernet header (inner Ethernet header), an inner IP header (inner IP header), and a data part of an IP packet. The inner packet includes the inner Ethernet header, the inner IP header, and a payload (payload) of the IP packet. The inner Ethernet header records a source media access control (media access control, MAC) address and a destination MAC address of the inner packet, and the inner IP header records a source IP address and a destination IP address of the inner packet.

The tunnel encapsulation header includes an outer Ethernet header (outer Ethernet header), an outer IP header (outer IP header), an outer user datagram protocol (user datagram protocol, UDP) header (outer UDP header), and the VXLAN header. The VXLAN header includes a VXLAN Flags field (8 bits), a reserved (reserved) field (24 bits), a VXLAN network identifier (VXLAN network identifier, VNI) (24 bits) field, and a reserved field (24 bits).

The outer Ethernet header records a source MAC address and a destination MAC address of a VTEP, and the outer IP header records a source IP address and a destination IP address of the VXLAN tunnel terminal.

The VXLAN tunnel terminal may also be referred to as a VTEP device. The VTEP device is a VXLAN tunnel endpoint, and is configured to encapsulate the inner packet. The outer Ethernet header, the outer IP header, the outer user datagram protocol header, and the VXLAN header are added to the inner packet to generate the VXLAN packet, and the VXLAN packet is sent to another VTEP device. In addition, a VXLAN packet received from another VTEP device may be decapsulated. The outer Ethernet header, the outer IP header, the outer user datagram protocol header, and the VXLAN header are removed from the VXLAN packet to obtain the inner packet, and the VNI field is obtained from the VXLAN header. Before encapsulating the inner packet, the VTEP device is further configured to perform tunnel matching on the inner packet, that is, which VNI identifier should be added to the inner packet, so that the inner packet is forwarded through a corresponding VXLAN tunnel.

During VXLAN encapsulation, the VTEP device uses the original packet as the inner packet of the VXLAN packet; records, in the outer Ethernet header of the tunnel encapsulation header of the VXLAN packet, a source MAC address as a MAC address of the VTEP device, and a destination MAC address as a MAC address of a next-hop device; records, in the outer IP header of the tunnel encapsulation header of the VXLAN packet, a source IP address as an IP address of the VTEP device, and a destination IP address as an IP address of a VTEP device at a peer end of the tunnel; and records a VNI identifier in the VNI field in the VXLAN header of the VXLAN packet. That is, when forwarding the VXLAN packet, a network device forwards the VXLAN packet based on address information in the tunnel encapsulation header.

It can be learned that implementing network isolation based on the VXLAN requires complex VXLAN tunnel matching, VXLAN header encapsulation, and VXLAN header removal operations, resulting in a long processing delay and poor packet forwarding performance. In addition, because the VXLAN header is a packet header added before the original packet (the inner packet), a frame header of the VXLAN packet is long. Consequently, the VXLAN packet occupies a large amount of additional network bandwidth in a network transmission process. To be specific, under a limitation of a maximum frame length, a payload length needs to be reduced when the packet header is excessively long. In this case, valid service data carried in the packet decreases, resulting in low network bandwidth utilization and a decrease in a throughput.

To resolve disadvantages of poor network isolation forwarding performance and low bandwidth utilization in a related technology, this application provides the following embodiments, to implement high-performance network isolation.

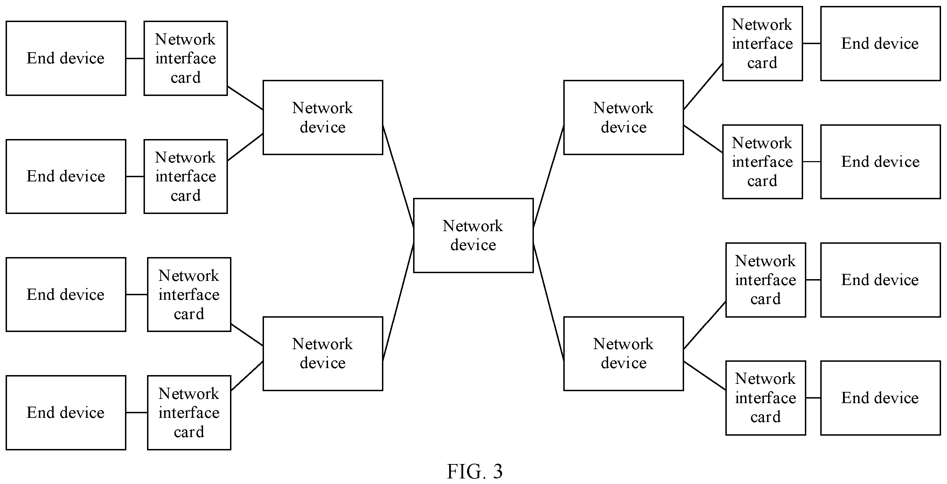

FIG. 3 is a diagram of a structure of an embodiment of a network isolation system according to this application. The network isolation system may be applied to a data center network, a campus network, an enterprise network, or a wide area network. In this embodiment, the network isolation system includes a plurality of network interface cards and a plurality of network devices. Each network interface card is connected to one end device. The end device is a physical machine, virtual machine, bare metal server, or container that does not include a physical network interface card. The virtual machine, the bare metal server, or the container may be collectively referred to as a virtual device. The network interface card connected to the end device is configured to receive/send a packet for the end device. A plurality of end devices are connected, through network interface cards connected to the plurality of end devices, to an IP network formed by the plurality of network devices, to implement interconnection between the end devices. A network that uses an IP protocol for communication is the IP network.

The network isolation system in this embodiment uses a transmission control protocol/internet protocol (transmission control protocol/internet protocol, TCP/IP) for communication. To be specific, the end device encapsulates to-be-sent data based on a format of an IP datagram to obtain an IP packet; and when forwarding the IP packet, the network device performs addressing, route selection, and the like based on a destination IP address in a packet header of the IP packet. The TCP/IP protocol is widely used, and is irrelevant to a data link layer and a physical layer that are lower layers. Therefore, the TCP/IP protocol may run in various data link layer networks, and may be connected to a network formed by different data link layer protocols. Therefore, the network isolation system uses the TCP/IP protocol, to be compatible with a plurality of data link layer networks, including existing data link layer networks such as the Ethernet, a token ring network, and a token bus, and data link layer networks launched in the future, so as to enable different data link layer networks to be presented as a large IP network. Therefore, this application is based on the IP network, and can implement large-scale network isolation.

The plurality of end devices are classified into a plurality of network partitions based on services, network logical planes, tenants to which the plurality of end devices belong, departments, or other principles. Each network partition includes at least one end device. At least one network partition identifier (network partition identifier, NPI) is allocated to each network partition. In this embodiment, an example in which one NPI is allocated to one network partition is used. NPIs allocated to different network partitions are different. NPIs of end devices in a same network partition are the same, and the NPIs of the end devices are NPIs allocated to the network partition to which the end devices belong. The device-side devices in the same network partition can communicate with each other because they are configured with the same NPI. End devices in different network partitions cannot communicate with each other because they are configured with different NPIs. Therefore, the different network partitions are isolated from each other.

Specifically, an NPI is configured in a network interface card connected to an end device, and each network interface card in which an NPI is configured is a network interface card that implements packet receiving and sending, NPI addition, and NPI removal processing based on a physical resource of a physical network interface card. The NPI is stored in a hardware resource of the network interface card, for example, a memory like a register, and the network interface card works at the data link layer and the physical layer, so that the NPI is invisible to the end device. In this way, a tenant is unaware of the NPI, to ensure that the NPI is not obtained or modified by a user other than a network administrator, so as to ensure security of network isolation implemented based on the NPI. The NPI corresponding to the network partition is configured for network interface cards connected to the end devices in the same network partition. Therefore, NPIs configured for network interface cards connected to end devices in different network partitions are different from each other.

Based on network isolation objects and a network isolation granularity, the end device may be a physical machine, a virtual machine, a container, a bare metal server, or the like. The network interface card may be a physical network interface card, or a physical function (physical function, PF) network interface card or a virtual function (virtual function, VF) network interface card virtualized on a physical network interface card. The PF network interface card and the VF network interface card are also network interface cards that implement packet receiving and sending, NPI addition, and NPI removal processing based on physical resources of the physical network interface card.

The physical network interface card may be specifically a smart network interface card (smart network interface card, smart NIC). The smart network interface card is a network interface card having a programmable capability. In addition to basic functions of receiving and sending packets, the smart network interface card may further include input/output (input/output, I/O) virtualization, a switching function, and the like.

When a plurality of virtual instances such as virtual machines or containers run on a host, a physical network interface card may be allocated to the virtual machines in an I/O virtualization mode for use. The I/O virtualization may be single-root input/output virtualization (single-root I/O virtualization, SR-IOV) or multi-root input/output virtualization (multi-root I/O virtualization, MR-IOV). Specifically, the SR-IOV technology is used as an example for description. The SR-IOV technology is a hardware-based virtualization solution, and can efficiently share a PCIe device between virtual machines. In addition, because the SR-IOV technology is implemented in hardware, efficient I/O performance can be obtained. A physical network port of a physical network interface card that supports the SR-IOV is virtualized into at least one PF network interface card and a plurality of VF network interface cards by using the SR-IOV technology. Based on an existing SR-IOV specification, each PF network interface card can have a maximum of 64,000 VF network interface cards associated with the PF network interface card. The PF network interface card or the VF network interface card is presented in a form of an independent network interface card and has its own exclusive peripheral component interconnect (peripheral component interconnect, PCI) configuration area. The PF network interface card and the VF network interface card may be collectively referred to as a passthrough network interface card.

After the passthrough network interface card is created, at least one passthrough network interface card may be directly designated to the virtual instances such as the virtual machines or the containers on the host for use, so that the plurality of virtual instances share the PCIe device through the at least one passthrough network interface card connected to the plurality of virtual instances. A plurality of VF network interface cards may be allocated to one virtual instance, but a one VF network interface card can be allocated to only one virtual instance. One physical network port of the physical network interface card corresponds to at least one PF network interface card and a plurality of VF network interface cards, and the VF network interface cards can share a physical resource (share the same physical network port) of the physical network interface card. When a virtual instance on the host sends a packet through a passthrough VF network interface card, the packet sent by the virtual instance is directly transferred to a VF network interface card of a physical network interface card through a VF network interface card driver installed on the virtual instance, the VF network interface card sends the packet to a physical switch or a virtual switch, and the physical switch or the virtual switch forwards the packet to a receiver of the packet, to implement direct communication between the virtual machine and another virtual machine on the host or between the virtual machine and an external network of the host. "Passthrough" means that the physical network interface card may be directly provided for the virtual instance for use by skipping a virtual machine manager in the host, to improve I/O performance of the virtual instance.

The physical network interface card may further include a switching device having a switching function. The switching device is, for example, a virtual switch (open virtual switch, OVS). The switching device forwards a data packet according to a MAC table, and is responsible for forwarding a data packet among a PF, a VF, and a physical network port of a physical network interface card, that is, can transfer traffic among virtual instances, and implement communication between a virtual machine and an external network.

In this embodiment, there is a binding relationship between an end device and a network interface card. Specifically, when the end device is a physical machine, the network interface card is a physical network interface card disposed in the physical machine. When the end device is a virtual device (virtual instance) like a virtual machine or a container, the network interface card is a VF network interface card or a PF network interface card allocated to the virtual device. In other words, the network interface card in this embodiment is a network interface card that performs functions such as packet encapsulation and receiving and sending based on a physical resource of a physical network interface card. A virtual switch in the physical network interface card, a virtual network interface card or a virtual switch virtualized in an operating system of the host or a virtual machine, a VF network interface card driver or a PF network interface card driver in the host or the virtual machine, and the like do not belong to the network interface card described in this application. In addition, when the end device is a virtual machine or a container, the network interface card connected to the end device is not a physical network interface card on which a corresponding PF network interface card or VF network interface card is located, but is a PF network interface card or a VF network interface card connected to the end device. That is, the network interface card in this embodiment uniquely corresponds to one end device, and at least one network interface card may be allocated to one end device, so that end-to-end network isolation can be accurately implemented.

To ensure that the NPI is not perceived, obtained, or modified by a tenant, the NPI may be configured for the network interface card in a trusted manner. The trusted manner includes, for example, a manner for configuring the NPI for the network interface card from a network side.

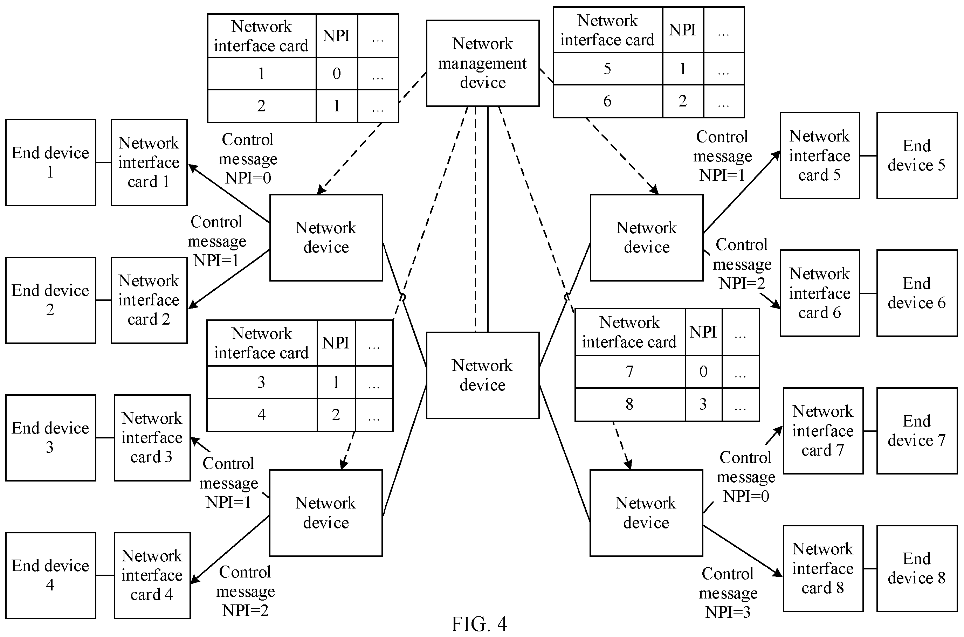

FIG. 4 is a diagram of a structure of another embodiment of a network isolation system according to this application. In FIG. 4, the network isolation system further includes a network management device. The network management device is configured to manage and control network devices. The network management device is connected to some or all of the network devices, to deliver a management packet and the like to each of the network devices in a network. After obtaining NPI allocation information of a network partition, the network management device distributes the NPI allocation information to a corresponding edge network device, and the edge network device further configures an NPI for a network interface card.

Specifically, the NPI allocation information includes, for example, configuration information of network interface cards connected to a plurality of end devices. Configuration information of each network interface card includes, for example, address information and an allocated NPI of the network interface card. The address information includes, for example, at least one of an IP address and a link-layer address. The network management device determines, based on a network topology and the address information, an edge network device connected to each network interface card, and sends the configuration information of the network interface card to the corresponding edge network device.

The edge network device generates, based on the configuration information of the network interface card, a control message for configuring the NPI for the network interface card. The control message includes the link-layer address and the NPI of the network interface card. The network interface card receives and identifies the control message, obtains the NPI in the control message, and stores the NPI, to complete NPI configuration. It should be noted that the control message does not include the IP address. In this way, after receiving the control message, the network interface card can identify that the control message is not a service packet, and therefore does not send the control message to the end device, and completes NPI configuration without being perceived by the end device. The edge network device sends the control message to the network interface card, where the control message does not need to be forwarded by another network device. Therefore, even if the control message does not include the IP address of the network interface card, the control message can be sent to the network interface card. In addition, it can be ensured that the control message can be securely sent to the network interface card without being intercepted by a third party.

For example, as shown in FIG. 4, a network device 1 to a network device 4 are edge network devices. Each of the network device 1 to the network device 4 receives the NPI allocation information from the network management device. The network device 1 encapsulates, based on configuration information of a network interface card 1, a value 0 of an NPI allocated to the network interface card 1 into a control message for configuring the network interface card 1, and then sends the control message to the network interface card 1. The network device 1 further encapsulates, based on configuration information of a network interface card 2, a value 1 of an NPI allocated to the network interface card 2 into a control message for configuring the network interface card 2, and then sends the control message to the network interface card 2. The other network devices may be deduced by analogy.

Optionally, to further improve security and reliability in a process in which the configuration information is sent from the network management device to an edge network device, the network management device may send configuration information of a network interface card to the edge network device over an out-of-band network (for example, a network connected by dashed lines in FIG. 4), and then the edge network device completes NPI configuration of the network interface card based on the configuration information. The out-of-band network is independent of a service data network that carries a service data flow. The out-of-band network and the service data network transmit information through different channels. Therefore, the configuration information of the network interface card is delivered to the edge network device over the out-of-band network, and does not share a same channel with the service data flow. This can avoid a case in which a packet loss of the configuration information occurs due to service data network congestion or the like, and improve reliability of transmitting the configuration information of the network interface card. The network device includes, for example, a baseboard management controller (baseboard management controller, BMC), and may provide an independent physical port (hereinafter referred to as an out-of-band port). An out-of-band port of each network device is connected to the network management device through a transmission medium, to form the out-of-band network. Therefore, the network device may be controlled and managed over the out-of-band network.

In some other implementations, a host includes a BMC, and the network management device may deliver configuration information of a network interface card over an out-of-band network connected to the BMC in the host. After receiving the configuration information of the network interface card, the BMC in the host sends the configuration information to the corresponding network interface card, so that the network interface card completes NPI configuration based on the configuration information.

After completing NPI configuration of the network interface card, when sending a packet over the network, the network interface card adds an NPI configured for the network interface card to a packet header of the packet, to obtain a target packet. The packet header of the target packet includes a link layer header and an IP network header. The NPI is located in the link layer header or IP network header. When receiving the target packet transmitted via a network device, a network interface card obtains the NPI in the packet header, and compares the NPI in the packet header with an NPI configured for the network interface card. The network interface card removes the NPI from the packet header if the NPI in the packet header is consistent with the NPI configured for the network interface card, and sends, to a connected end device, the target packet from which the NPI is removed; or discards the target packet if the NPI in the packet header is inconsistent with the NPI configured for the network interface card, to implement traffic isolation between end devices in different network partitions. In addition, regardless of layer-2 forwarding or layer-3 forwarding, the network device reserves the NPI in the packet header when forwarding the target packet, so that the NPI in the packet header can be transmitted, along with the target packet, from the source network interface card that sends the target packet to the destination network interface card that receives the target packet, that is, the NPI is carried in the target packet in an end-to-end manner, and the NPI is transparently transmitted over the IP network.

In this embodiment, the target packet sent by the network interface card includes only a single-layer packet header, that is, the target packet includes a single-layer link layer header and a single-layer IP network header. The network interface card does not need to add an outer packet header to the packet, but needs to add only the NPI configured for the network interface card to the packet header. An operation is simple and efficiency is high. In addition, the NPI in the target packet is added by the network interface card, and the network device does not need to add the NPI to the target packet, so that forwarding performance of the network device can be improved.

The NPI in this embodiment is not used for forwarding, to be specific, there is no need to perform complex configuration for the network device, and the network device does not need to learn and establish a forwarding entry related to the NPI. When forwarding the target packet carrying the NPI, the network device does not need to determine a forwarding port and a forwarding path based on the NPI either. The network device only needs to forward the target packet based on destination address information in the packet header of the target packet. An operation of forwarding the target packet by the network device is simple, and forwarding efficiency is high.

In this embodiment, end-to-end network isolation is implemented through the end network interface cards. The target packet with the packet header to which the NPI is added can be forwarded by the network device like a conventional IP packet, and the network device does not need to encapsulate or remove, for the target packet, a tunnel encapsulation header used for network isolation. This can improve forwarding performance of the target packet in the network. In addition, the network interface card connected to an end device adds the NPI to the packet header, and the network interface card works at a link layer and a physical layer. Therefore, the end device does not perceive that the network interface card adds the NPI to the packet header. The NPI is located in the packet header, and an operating system of the end device does not need to obtain the NPI in the packet through parsing. Instead, the network interface card may directly obtain the NPI from the packet, to ensure that the NPI is invisible to the end device. This ensures security and reliability of the NPI. NPI configuration and a usage environment are secure and reliable. Therefore, network isolation implemented based on the NPI is also secure and reliable. In a large-scale IP network isolation scenario, in the solution provided in this embodiment, secure and reliable network isolation can be implemented without performing complex configuration for the network device, adding a hardware firewall, or the like. Implementation is simple, and costs are low.

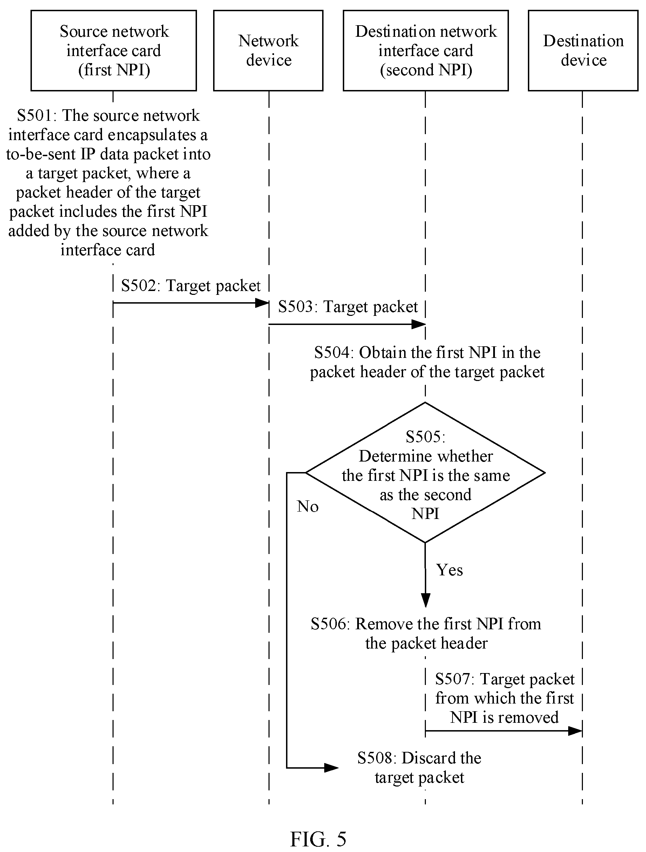

Specifically, a method for implementing end-to-end network isolation based on an NPI is shown in FIG. 5. FIG. 5 is a schematic flowchart of an embodiment of a network isolation method according to this application. The network isolation method in this embodiment is based on the foregoing network isolation system. A source device in FIG. 5 is an end device that sends a target packet, and a destination device is an end device that receives the target packet. A source network interface card is a network interface card connected to the source device, and a destination network interface card is a network interface card connected to the destination device. The source network interface card and the destination network interface card are connected via a network device. The source device and the destination device may be end devices of a same type, or may be end devices of different types. For example, the source device may be a virtual machine, and the destination device may be a physical machine. This may be determined based on an actual situation. This is not limited in this application. The source device and the destination device may be virtual devices located in a same host. In this case, the network device may include a virtual switch in a physical network interface card in which the source network interface card and the destination network interface card are located. If IP addresses of the source network interface card and the destination network interface card belong to a same IP network segment, the virtual switch may forward the target packet. If IP addresses of the source network interface card and the destination network interface card belong to different IP network segments, the network device includes a layer-3 network device (a layer-3 switch, a router, or the like), and the layer-3 network device participates in forwarding of the target packet. If the source device and the destination device are located in different hosts, the network device includes at least one physical switch, at least one physical router, or the like. Steps in this embodiment are as follows:

S501: The source network interface card processes to-be-sent data to obtain the target packet, where a packet header of the target packet includes a first NPI added by the source network interface card.

The first NPI is an NPI configured for the source network interface card.

The target packet in this embodiment includes only a single-layer packet header, and a tunnel encapsulation header used for network isolation and the like do not need to be added to the to-be-sent data. Specifically, the packet header of the target packet includes a single-layer link layer header and a single-layer IP network header. A source IP address in the IP network header is an IP address of the source network interface card, and a destination IP address is an IP address of the destination network interface card. A source physical address in the link layer header is a physical address of the source network interface card, and a destination physical address is a physical address of a gateway (when the source network interface card and the destination network interface card are deployed in the same IP network segment, and layer-3 forwarding is required), or a physical address of the destination network interface card (when layer-3 forwarding is not required). The packet header of the target packet further includes a network partition identifier field, and the network partition identifier field is used to carry the first NPI. The network partition identifier field may be located in the link layer header, or may be located in the IP network header.

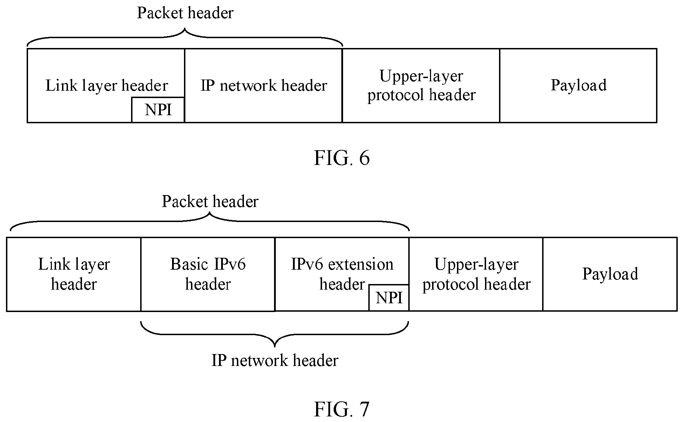

FIG. 6 is a diagram of a packet structure of a target packet according to this application, and FIG. 7 is a diagram of a packet structure of another target packet according to this application. In addition to a link layer header and an IP network header, the target packet further includes an upper-layer protocol header and a payload (payload). The upper-layer protocol header includes, for example, a TCP header or a UDP header. The payload is used to carry application data. In FIG. 6, the network partition identifier field is located in the link layer header. In FIG. 7, the network partition identifier field is located in the IP network header. When the target packet is an internet protocol version 6 (Internet protocol version 6, IPv6) packet, the IP network header is an IPv6 network header, and the network partition identifier field may be located in an IPv6 extension header in the IPv6 network header.

The source network interface card may be a TCP/IP network interface card or a remote direct memory access (remote direct memory access, RDMA) network interface card. Manners of adding the first NPI by source network interface cards of different types are different, and to-be-sent data is also different. The following separately provides descriptions.

When the source network interface card is the TCP/IP network interface card, the to-be-sent data is an original packet that is from the source device and into which a packet header is encapsulated. To distinguish from the packet header of the target packet, the packet header of the original packet is referred to as an original packet header below. The original packet header includes the link layer header and the IP network header. Because the first NPI is invisible to the source device, the first NPI does not exist in the original packet header. That the source network interface card processes the to-be-sent data is specifically that the source network interface card modifies the original packet header, and adds the first NPI to the link layer header or the IP network header of the original packet header, to obtain the target packet. The target packet includes a payload of the original packet and the packet header to which the first NPI is added.

When the source network interface card is the RDMA network interface card, the source network interface card obtains the to-be-sent data from a storage space of the source device in a direct memory access (direct memory access, DMA) manner. A process in which the source network interface card obtains the to-be-sent data does not involve an operating system and a protocol stack of the source device. Therefore, the to-be-sent data is application data that is from the source device and on which encapsulation processing is not performed, and the source network interface card needs to encapsulate the to-be-sent data according to a TCP/IP protocol. That the source network interface card processes the to-be-sent data is specifically that the source network interface card encapsulates, for the to-be-sent data, the packet header including the first NPI, to obtain the target packet. The to-be-sent data is carried in the payload field in the target packet in FIG. 6 or FIG. 7. When encapsulating the packet header for the to-be-sent data, the source network interface card synchronously adds the first NPI to the packet header, so that encapsulation processing efficiency is high and a delay is short.

A length of the network partition identifier field may be 14 bits, 16 bits, 18 bits, 20 bits, 24 bits, or the like. Therefore, a large quantity of network partition identifiers can be provided, and can be applied to large-scale IP network isolation.

Compared with a solution of adding an outer Ethernet header, an outer IP header, an outer UDP header, and a VXLAN header before an inner packet, this embodiment greatly simplifies a packet format, so that an NPI encapsulation operation is simpler. In addition, a length of the packet header is controlled, so that network bandwidth utilization and data transmission efficiency are not greatly affected.

Optionally, to enable the network device and the destination network interface card to identify the target packet including the network partition identifier field, in addition to the network partition identifier field, a field for identifying the target packet and the like may be further added to the packet header of the target packet. However, compared with a packet having a double-layer packet header, the target packet in this application still has a shorter length and a simpler encapsulation mode.

S502: The source network interface card sends the target packet to the network device.

S503: The network device forwards the target packet to the destination network interface card.

The network device forwards the target packet to the destination network interface card based on address information in the packet header of the target packet. The address information in the packet header includes, for example, the destination physical address in the link layer header and the destination IP address in the IP network header. During layer-2 forwarding, the network device may forward the target packet based on the destination physical address. During layer-3 forwarding, the network device needs to forward the target packet based on the destination IP address. To be specific, in a process of forwarding the target packet, the network device does not encapsulate, for the target packet, another layer of tunnel encapsulation header used for network isolation, to forward the target packet based on address information in the tunnel encapsulation header, but directly forwards the target packet based on the address information in the packet header of the target packet. Because the target packet is an IP packet, and the network device is a device in an IP network, the target packet can be transmitted across IP network segments and across link layer networks based on the address information in the packet header of the target packet.

In this embodiment, the network device does not process the first NPI in the target packet, but forwards the target packet based on the address information in the packet header like a conventional IP packet. That is, the first NPI is transparently transmitted in the IP network. The NPI in this embodiment may be used only for network isolation, and does not participate in forwarding. The network device does not need to establish a routing entry for forwarding related to the first NPI, and does not need to perform table lookup based on the first NPI for forwarding. The network device only needs to forward the target packet whose packet header carries the first NPI as a normal IP packet, and the network device does not need to perform operations such as modifying and replacing the NPI for the target packet. This can improve forwarding performance of the network device.

When layer-3 forwarding needs to be performed on the target packet, the network device includes the layer-3 network device. If the first NPI is located in the link layer header, because an original link layer header of the target packet needs to be replaced with a new link layer header during layer-3 forwarding, when replacing the link layer header, the layer-3 network device inherits the first NPI in the original link layer header, and adds the first NPI to the new link layer header, to ensure that the first NPI is reserved in the forwarding process of the network device, so as to implement end-to-end carrying of the first NPI.

S504: The destination network interface card obtains the first NPI in the packet header of the target packet.

After receiving the target packet, the destination network interface card obtains the first NPI from the network partition identifier field in the packet header.

S505: The destination network interface card determines whether the first NPI is the same as a second NPI, where the second NPI is an NPI configured for the destination network interface card.

After obtaining the first NPI, the destination network interface card compares the first NPI with the second NPI configured for the destination network interface card. If the first NPI is the same as the second NPI, it indicates that the source device that sends the target packet and the destination device belong to a same network partition, and communication between the source device and the destination device is allowed. In this case, S506 is performed. If the first NPI is different from the second NPI, it indicates that the source device that sends the packet and the destination device do not belong to a same network partition, and communication between the source device and the destination device is not allowed. In this case, S508 is performed.

S506: The destination network interface card removes the first NPI from the packet header.

To prevent the first NPI from being exposed to the end device because the first NPI in the target packet is sent to the destination device, and the destination device from failing to perform decoding due to existence of the first NPI, the destination network interface card removes the first NPI from the packet header of the target packet before sending the target packet to the destination device.

When the destination network interface card is a TCP/IP network interface card, the destination network interface card needs to remove only the first NPI from the target packet.

When the destination network interface card is an RDMA network interface card, the destination network interface card removes the packet header of the target packet to remove the first NPI. In this case, the target packet from which the first NPI is removed is application data that does not include the packet header.

S507: The destination network interface card sends, to the destination device, the target packet from which the first NPI is removed.

After performing an operation like NPI removal on the target packet, the destination network interface card sends, to the destination device, the target packet from which the first NPI is removed, to complete transmission of the target packet.

S508: The destination network interface card discards the target packet.

When the first NPI is different from the second NPI, the destination network interface card discards the target packet. The target packet is not sent to the destination device, so that traffic between end devices in different network partitions does not communicate, thereby implementing network isolation.

In this embodiment, the source network interface card adds the first NPI to the to-be-sent data to obtain the target packet whose packet header includes the first NPI, and sends the target packet to the destination device via the network device. When forwarding the target packet, the network device reserves the first NPI in the packet header. In this way, after receiving the target packet, the destination network interface card can obtain the first NPI in the target packet; and allow the target packet to pass through when the first NPI is the same as the second NPI configured for the destination network interface card, and send the target packet to the destination device; or discard the target packet when the first NPI is different from the second NPI configured for the destination network interface card. Therefore, communication between end devices in a same network partition can be implemented, but end devices in different network partitions cannot communicate with each other. Effective, reliable, and secure network isolation is implemented with low data plane overheads and costs. Compared with current another network isolation technology, this technology improves forwarding performance and bandwidth utilization of network devices while ensuring secure and effective network isolation. In addition, this technology can be applied to large-scale IP network isolation.

In the first embodiment of the network isolation method, network isolation is implemented only by determining, by the network interface card, whether the NPI in the target packet is consistent with the NPI of the network interface card. When there is a network attack, to reduce impact caused by excessive network attack traffic occupying excessive bandwidth of the network interface card, this application further provides a second embodiment of the network isolation method. A difference from the first embodiment of the network isolation method lies in that, in the second embodiment of the network isolation method, an edge network device connected to a network interface card may also check an NPI in a target packet that passes through; and allow the corresponding target packet to pass through when the NPI in the packet is an NPI allowed to pass through; or discard the corresponding target packet when the NPI in the packet is not an NPI allowed to pass through, to assist the network interface card in filtering attack traffic.

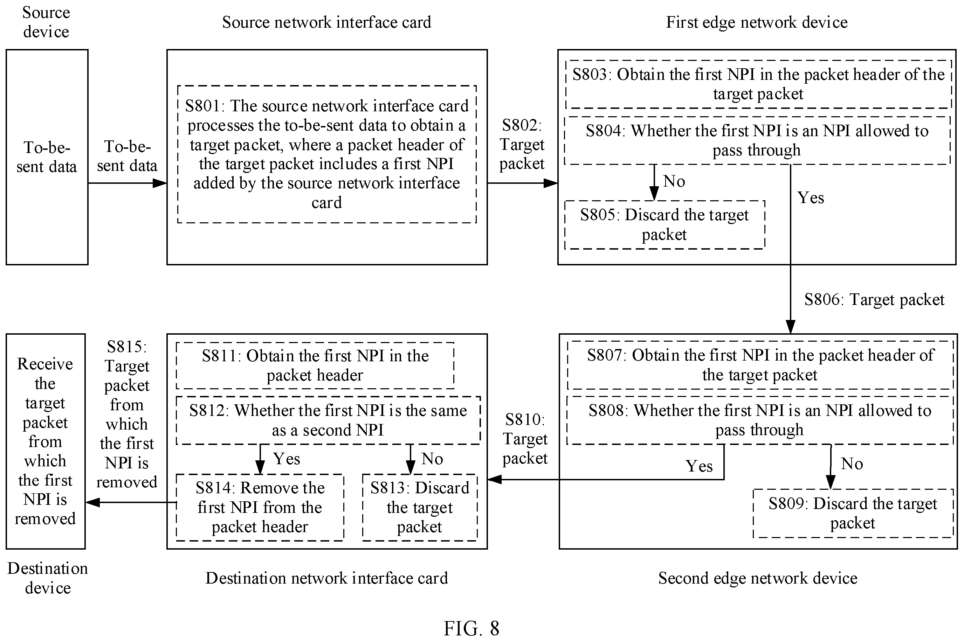

Specifically, FIG. 8 is a schematic flowchart of a second embodiment of a network isolation method according to this application. This embodiment includes the following steps.

S801: A source network interface card processes to-be-sent data to obtain a target packet, where a packet header of the target packet includes a first NPI added by the source network interface card.

S802: The source network interface card sends the target packet to a first edge network device.

The first edge network device is a physical network device connected to the source network interface card.

Content of S801 and S802 is similar to that of S501 and S502, and details are not described herein again.

S803: The first edge network device obtains the first NPI in the packet header of the target packet.

S804: The first edge network device determines whether the first NPI is an NPI allowed to pass through.

If the first NPI is not the NPI allowed to pass through, S805 is performed; or if the first NPI is the NPI allowed to pass through, S806 is performed.

For example, at least one NPI allowed to pass through is configured for a first port that is connected to the source network interface card and that is of the first edge network device. When the first NPI is in the at least one NPI allowed to pass through, it is confirmed that the first NPI is the NPI allowed to pass through. When the first NPI is not in the at least one NPI allowed to pass through, it is confirmed that the first NPI is an NPI not allowed to pass through. If a source device is a physical machine, or a same NPI is configured for network interface cards connected to virtual machines or containers on a host on which a source device is located, one NPI allowed to pass through, that is, the first NPI, may be configured for the first port. If a source end is a virtual machine or a container, a host on which the source device is located includes a plurality of virtual machines or containers, and different NPIs are configured for network interface cards in network interface cards connected to these virtual machines or containers, a plurality of NPIs allowed to pass through may be configured for the first port. The NPIs allowed to pass through the first port may include NPIs of all network interface cards connected to the first port. If the first NPI is not the NPI allowed to pass through, it indicates that the first NPI is not an NPI configured by a network management device or a network administrator for the source network interface card, and the target packet is not forwarded by the first edge network device to a destination network interface card.

It may be understood that one port of the edge network device is connected to only one physical network port of a physical network interface card. When at least one PF network interface card and a plurality of VF network interface cards are virtualized from the physical network port of the physical network interface card, the PF network interface card and the VF network interface cards share the physical network port of the physical network interface card, and are connected to a port of the first edge network device. Therefore, it is presented that the port of the edge network device is connected to the at least one PF network interface card or the plurality of VF network interface cards. In this case, a plurality of NPIs allowed to pass through may be configured for the port of the edge network device.

The first edge network device determines, by checking the NPI in the packet header, whether the target packet is allowed to pass through. This can ensure that even if the NPI is maliciously tampered with, the first edge switch can perceive such an exception, and ensure that an abnormal target packet is not transmitted to a destination device over a network. This improves security of the network.

S805: The first edge network device discards the target packet.

S806: The first edge network device forwards the target packet to the destination network interface card based on address information in the packet header of the target packet.

S807: A second edge network device obtains the first NPI in the packet header of the target packet.

The second edge network device is a physical network device connected to the destination network interface card. The target packet needs to be forwarded by the second edge network device before arriving at the destination network interface card. After receiving the target packet, the second edge network device further obtains the first NPI in a network partition identifier field in the packet header of the target packet, and determines, based on the first NPI, whether the target packet needs to be forwarded to the destination network interface card. If the source device and the destination device are connected to a same edge network device, the first edge network device and the second edge network device are a same network device. If the source device and the destination device are connected to different edge network devices, the first edge network device and the second edge network device are different network devices.

S808: The second edge network device determines whether the first NPI is an NPI allowed to pass through.

If the first NPI is not the NPI allowed to pass through, S809 is performed; or if the first NPI is the NPI allowed to pass through, S810 is performed.

For example, at least one NPI allowed to pass through is configured for a second port that is connected to the destination network interface card and that is of the second edge network device. When the first NPI is in the at least one NPI allowed to pass through, it is confirmed that the first NPI is the NPI allowed to pass through. When the first NPI is not in the at least one NPI allowed to pass through, it is confirmed that the first NPI is an NPI not allowed to pass through.

If the destination device is a physical machine, or a same NPI is configured for network interface cards connected to virtual machines or containers on a host on which the destination device is located, one NPI allowed to pass through may be configured for the second port, where NPI allowed to pass through may be an NPI configured for the destination network interface card. In this case, if the first NPI is the NPI allowed to pass through, it indicates that the first NPI is the same as the NPI configured for the destination network interface card, and the second edge network device may allow the target packet to pass through. If the first NPI is not the NPI allowed to pass through, it indicates that the first NPI is different from the NPI configured for the destination network interface card, the source device and the destination device do not belong to a same network partition, traffic between the source device and the destination device should be isolated, and the second edge network device does not forward the target packet to the destination network interface card.

If the destination device is a virtual machine or a container, a host on which the destination device is located includes a plurality of virtual machines or containers, and different NPIs are configured for network interface cards in network interface cards connected to these virtual machines or containers, a plurality of NPIs allowed to pass through may be configured for the second port. The NPIs allowed to pass through the second port may include NPIs of all network interface cards connected to the second edge network device. In this case, if the first NPI is an NPI allowed to pass through the second port, it indicates that in VF network interface cards and PF network interface cards that correspond to a physical network port of a physical network interface card connected to the second port, an NPI configured for a network interface card is the same as the first NPI, and the target packet may be forwarded to the destination network interface card. Whether the first NPI is consistent with a second NPI configured for a network interface card is determined by the destination network interface card. If the first NPI is not an NPI allowed to pass through the second port, it indicates that in VF network interface cards and PF network interface cards that correspond to a physical network port of a physical network interface card connected to the second port, no NPI configured for a network interface card is the same as the first NPI, that is, in all end devices that are connected to the physical network port of the physical network interface card and that include the destination device, an end device and the source device do not belong to a same network partition, and the second edge network device does not forward the target packet to the destination network interface card. This implements traffic isolation traffic between different network partitions.

S809: The second edge network device discards the target packet.

The second edge network device discards the target packet, to implement traffic isolation between different network partitions.

Optionally, in addition to discarding the target packet, the second edge network device may further perform error statistics collection based on related information obtained from the packet, to obtain error statistics information. The related information is analyzed, including, for example, at least one of a physical address of the destination network interface card, an IP address of the destination network interface card, a physical address of the source network interface card, an IP address of the source network interface card, a port number, a packet receiving time, and the like. The error statistics information may be used to analyze a reason, a frequency, and the like of an error to perform related processing.

S810: The second edge network device forwards the target packet to the destination network interface card based on the address information in the packet header of the target packet.

S811: The destination network interface card obtains the first NPI in the packet header.

S812: The destination network interface card determines whether the first NPI is the same as a second NPI, where the second NPI is an NPI configured for the destination network interface card.

If the first NPI is different from the second NPI, S813 is performed. If the first NPI is the same as the second NPI, S814 is performed.

S813: The destination network interface card discards the target packet.

Optionally, in addition to discarding the target packet, the destination network interface card may further obtain the related information from the target packet to perform error statistics collection. For details, refer to the related descriptions of S809, and details are not described herein again.

S814: The destination network interface card removes the first NPI from the packet header.

S815: The destination network interface card sends, to the destination device, the target packet from which the first NPI is removed.

Content of S811 to S815 is similar to that of S504 to S508 in the first embodiment of the network isolation method, and details are not described herein again.

In this embodiment, S803 to S805 are optional steps, or S807 to S809 are optional steps. This is not limited in this application.

In this embodiment, the edge network device determines, by determining whether the first NPI in the packet header of the target packet is the NPI allowed to pass through, whether to forward the target packet to the destination network interface card, and screens the target packet on a network side, to assist the destination network interface card in isolating abnormal traffic, so as to reduce a risk that the destination network interface card cannot work normally when being attacked.

Network isolation solutions in this application may be used for network isolation in a plurality of scenarios, for example, isolation between physical machines, isolation between virtual machines or containers, and isolation between network logical planes. Certainly, network isolation may alternatively be performed between at least two of a physical machine, a virtual machine, and a container according to the network isolation solutions provided in this application.

To make the network isolation solutions in this application easier to understand, the following separately describes the three scenarios: network isolation between physical machines, network isolation between virtual machines, and isolation between network logical planes by using examples. In the following scenarios, an IP protocol is used for communication, and all packets in a communication process are target packets.

### Scenario 1: Network isolation between physical machines

When a physical machine completely belongs to a tenant or service and network isolation is not required for computing or storage resources in the physical machine, network isolation may be performed at a granularity of the physical machine.

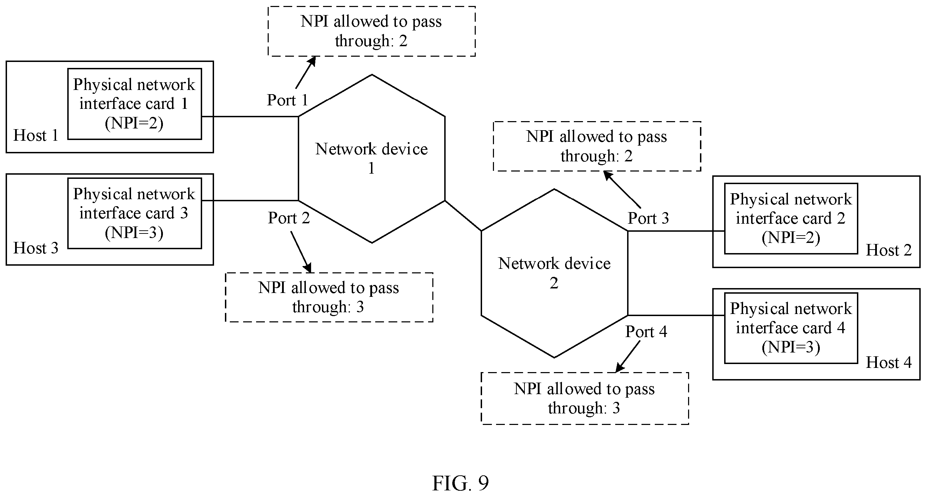

For example, FIG. 9 is a diagram of an application scenario of a network isolation method according to this application. In FIG. 9, an example in which end devices include a host 1 to a host 4, and network devices include a network device 1 and a network device 2 is used. The host 1 to the host 4 are all independent physical machines. The host 1 and the host 3 are respectively connected to a port 1 and a port 2 of the network device 1, and the host 2 and the host 4 are respectively connected to a port 3 and a port 4 of the network device 2. The network device 1 is an edge network device of the host 1 and the host 3, and the network device 2 is an edge network device of the host 2 and the host 4. The network device 1 and the network device 2 are directly connected or connected via another network device. An NPI configured for a physical network interface card 1 connected to the host 1 is 2 (for ease of understanding, the NPI is in decimal format), an NPI configured for a physical network interface card 2 connected to the host 2 is 2, an NPI configured for a physical network interface card 3 connected to the host 3 is 3, and an NPI configured for a physical network interface card 4 connected to the host 4 is 3. That is, the host 1 and the host 2 belong to a same network partition, and the host 3 and the host 4 belong to a same network partition. The network partition to which the host 1 and the host 2 belong is different from the network partition to which the host 3 and the host 4 belong.

After adding an NPI configured for each physical network interface card to an NPI field in a packet header of a packet, the physical network interface card sends the packet to a destination device via a network device. An NPI carried in an NPI field in a packet header of a packet sent by the physical network interface card 1 is 2, an NPI carried in an NPI field in a packet header of a packet sent by the physical network interface card 2 is 2, an NPI carried in an NPI field in a packet header of a packet sent by the physical network interface card 3 is 3, and an NPI carried in an NPI field in a packet header of a packet sent by the physical network interface card 4 is 3.

If the physical network interface card 2 receives the packet sent by the physical network interface card 1, and obtains a value 2 of the network partition identifier field in the packet header of the packet, where the value is consistent with the value of the NPI configured for the physical network interface card 2, the packet is allowed to pass through, and the physical network interface card 2 processes the packet (removes the NPI, the same below) and sends a processed packet to the host 1. If the physical network interface card 4 receives the packet sent by the physical network interface card 3, and obtains a value 3 of the network partition identifier field in the packet header of the packet, where the value is consistent with the value of the NPI configured for the physical network interface card 4, the packet is allowed to pass through, and the physical network interface card 4 processes the packet and sends a processed packet to the host 4. If the physical network interface card 2 receives the packet from the physical network interface card 3, and obtains the value 3 of the network partition identifier field in the packet header of the packet, where the value is inconsistent with the value of the NPI configured for the physical network interface card 2, the physical network interface card 2 discards the packet.

Optionally, an NPI same as that of a connected physical network interface card may be configured for a port of the network device as an NPI allowed to pass through the port. An NPI allowed to pass through and configured for the port 1 of the network device 1 is 2, that is, the NPI of the physical network interface card 1. An NPI allowed to pass through and configured for the port 2 is 3, that is, the NPI of the physical network interface card 3. An NPI allowed to pass through and configured for the port 2 of the network device 2 is 2, that is, the NPI of the physical network interface card 2. An NPI allowed to pass through and configured for the port 4 is 3, that is, the NPI of the physical network interface card 4. The network device 1 obtains the NPI from the network partition identifier field in the packet header of the packet. When a value of a network partition identifier field of a packet that needs to pass through the port 1 is 2, the network device 1 allows the packet to pass through. When a value of a network partition identifier field of a packet that needs to pass through the port 1 is not 2, the network device 1 discards the packet. This is the same for the port 2. A check manner of the network device 2 is similar, and details are not described herein again. Therefore, the network device may assist a network interface card in screening network traffic. When a traffic attack occurs, load of the network interface card can be reduced.

### Scenario 2: Isolation between network logical planes

A network may be divided into a plurality of logical planes, such as a management plane, a storage plane, and a service plane. The management plane is used to manage a virtual machine, a container, or a physical machine. The storage plane is used by the virtual machine, the container, or the physical machine to access a storage resource. The service plane is used to exchange service data. The three logical planes need to be isolated from each other. The network logical planes may be carried on physical machines, virtual machines, or containers to isolate computing or storage resources between the network logical planes. Based on infrastructure (a physical machine, a virtual machine, or a container) carrying the network logical plane, a network interface card connected to the network logical plane may be a physical network interface card, a VF network interface card, or a PF network interface card.

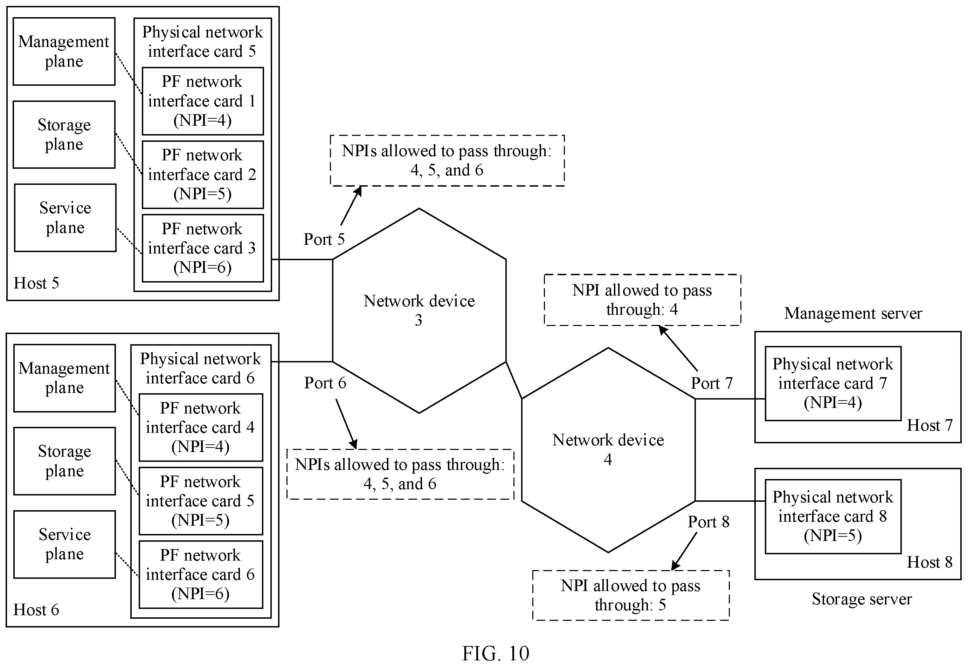

For example, FIG. 10 is a diagram of another application scenario of a network isolation method according to this application. In FIG. 10, an NPI configured for a PF network interface card 1 connected to a management plane of a host 5 is 4, an NPI configured for a PF network interface card 2 connected to a storage plane is 5, and an NPI configured for a PF network interface card 3 connected to a service plane is 6. An NPI configured for a PF network interface card 4 connected to a management plane of a host 6 is 4, an NPI configured for a PF network interface card 5 connected to a storage plane is 5, and an NPI configured for a PF network interface card 6 connected to a service plane is 6. A host 7 is a management server, occupies an entire physical machine, and belongs to a management plane. An NPI configured for a physical network interface card 7 connected to the host 7 is 4. A host 8 is a storage server, occupies an entire physical machine, and belongs to a storage plane. An NPI configured for a physical network interface card 8 connected to the host 8 is 5. That is, a same network logical plane belongs to a same network partition, and different network logical planes belong to different network partitions. In this way, the network logical planes are isolated from each other.

The PF network interface cards 1 to 6 and the physical network interface cards 7 and 8 add the NPIs configured for the PF network interface cards 1 to 6 and the physical network interface cards 7 and 8 to network partition identifier fields in packet headers of sent packets, and check, when receiving a packet from a network, whether an NPI in the packet is consistent with the NPIs configured for the PF network interface cards 1 to 6 and the physical network interface cards 7 and 8. When the NPI in the packet is consistent with the NPIs configured for the PF network interface cards 1 to 6 and the physical network interface cards 7 and 8, it indicates that the packet comes from a same logical plane, and the packet may be forwarded to the corresponding network logical plane. When the NPI in the packet is inconsistent with the NPIs configured for the PF network interface cards 1 to 6 and the physical network interface cards 7 and 8, it indicates that the packet comes from a different logical plane, and the packet is discarded. For example, the PF network interface card 1 receives a packet from the physical network interface card 7, and obtains a value 4 of a network partition identifier field in a packet header of the packet, where the value is the same as the value of the NPI configured for the physical network interface card 7. This indicates that the packet is from the management plane, the packet is allowed to pass through, and the physical network interface card 7 processes the packet and sends a processed packet to the management plane of the host 5. The physical network interface card 8 receives a packet from the PF network interface card 2, and obtains a value 5 of a network partition identifier field in a packet header of the packet, where the value is the same as the value of the NPI configured for the physical network interface card 8. This indicates that the packet is from the storage plane, the packet is allowed to pass through, and the physical network interface card 8 processes the packet and sends a processed packet to the host 8. The physical network interface card 7 receives a packet from the PF network interface card 3, and obtains a value 6 of a network partition identifier field in a packet header of the packet, where the value is different from the value of the NPI configured for the physical network interface card 7. This indicates that the packet comes from another network logical plane, and the physical network interface card 7 discards the packet.

Optionally, an NPI list may be configured for a port of a network device, and NPIs in the NPI list are NPIs allowed to pass through the port. The NPIs in the NPI list include NPIs configured for all PF network interface cards connected to the port of the network device or an NPI configured for a physical network interface card connected to the port of the network device. An NPI list configured for a port 5 of a network device 3 includes 4, 5, and 6, that is, the NPIs of the PF network interface card 1, the PF network interface card 2, and the PF network interface card 3. An NPI list configured for a port 6 includes 4, 5, and 6, that is, the NPIs of the PF network interface card 4, the PF network interface card 5, and the PF network interface card 6. An NPI allowed to pass through and configured for a port 7 of a network device 4 is 4, that is, the NPI of the physical network interface card 7. An NPI allowed to pass through and configured for a port 8 is 5, that is, the NPI of the physical network interface card 8. The network device 3 obtains an NPI from a network partition identifier field in a packet header of a packet. When a value of a network partition identifier field of a packet that needs to pass through the port 5 is 4, 5, or 6, the network device 3 allows the packet to pass through. When a value of a network partition identifier field of a packet that needs to pass through the port 5 is not 4, 5, or 6, the network device 3 discards the packet. This is the same for the port 6. A check manner of the network device 4 is similar, and details are not described herein again.

### Scenario 3: Isolation between virtual machines

Virtual machines in a data center belong to a plurality of tenants. Virtual machines of different tenants need to be isolated from each other. Therefore, virtual machines belonging to a same tenant may be grouped into a same network partition, and virtual machines of different tenants may be grouped into different network partitions, to isolate virtual machines of different tenants. In addition, regardless of whether the virtual machines are located on a same host, isolation may be implemented according to the network isolation solutions provided in this application.

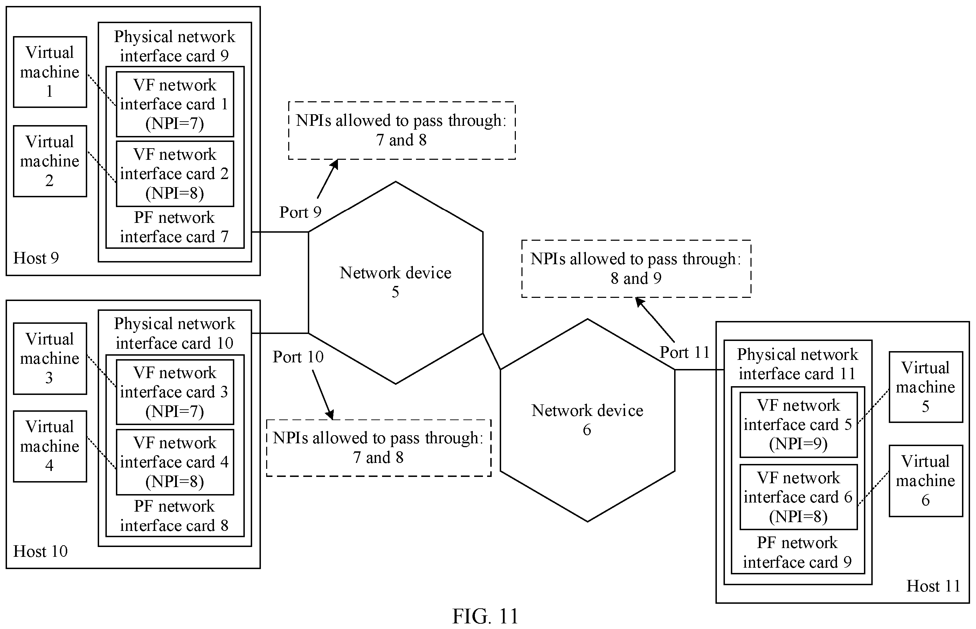

For example, FIG. 11 is a diagram of another application scenario of a network isolation method according to this application. In FIG. 11, a host 9 includes a virtual machine 1 and a virtual machine 2. The virtual machine 1 is bound to a VF network interface card 1, and the virtual machine 2 is bound to a VF network interface card 2. A host 10 includes a virtual machine 3 and a virtual machine 4. The virtual machine 3 is bound to a VF network interface card 3, and the virtual machine 4 is bound to a VF network interface card 4. A host 11 includes a virtual machine 5 and a virtual machine 6. The virtual machine 5 is bound to a VF network interface card 5, and the virtual machine 6 is bound to a VF network interface card 6.

The virtual machine 1 and the virtual machine 3 belong to a tenant 1. The two virtual machines are grouped into a same network partition and an allocated NPI is 7. Therefore, NPIs of the VF network interface card 1 and the VF network interface card 3 are both set to 7. The virtual machine 2, the virtual machine 4, and the virtual machine 6 belong to a tenant 2. The three virtual machines are grouped into a same network partition and an allocated NPI is 8. Therefore, NPIs of the VF network interface card 2, the VF network interface card 4, and the VF network interface card 6 are all set to 8. The virtual machine 5 belongs to a tenant 3 and is also grouped into a network partition. An allocated NPI is 9, and an NPI configured for the VF network interface card 5 is 9.

The VF network interface cards 1 to 6 add the NPIs configured for the VF network interface cards 1 to 6 to network partition identifier fields in packet headers of sent packets, and check, when receiving a packet from a network, whether an NPI in the packet is consistent with the NPIs configured for the VF network interface cards 1 to 6. When the NPI in the packet is consistent with the NPIs configured for the VF network interface cards 1 to 6, it indicates that the packet comes from a same network partition, that is, a same tenant, and the packet may be forwarded to a corresponding virtual machine. When the NPI in the packet is inconsistent with the NPIs configured for the VF network interface cards 1 to 6, it indicates that the packet comes from a different network partition, and the packet is discarded. In this way, networks of different tenants are isolated. For example, the VF network interface card 1 receives a packet from the VF network interface card 2, and the VF network interface card 1 obtains a value 8 of a network partition identifier field in a packet header of the packet, where the value is different from the value of the NPI configured for the VF network interface card 1. This indicates that the packet comes from a different tenant, and the VF network interface card 1 discards the packet. The VF network interface card 6 receives a packet from the VF network interface card 4, and the VF network interface card 6 obtains a value 8 of a network partition identifier field in a packet header of the packet, where the value is the same as the value of the NPI configured for the VF network interface card 6. This indicates that the packet comes from a same tenant, the packet is allowed to pass through, and the VF network interface card 6 processes the packet and sends a processed packet to the virtual machine 6.

Optionally, an NPI list may be configured for a port of a network device, and NPIs in the NPI list are NPIs allowed to pass through the port. The NPIs in the NPI list include NPIs configured for all VF network interface cards connected to the port of the network device. An NPI list configured for a port 9 of a network device 5 includes 7 and 8, that is, the NPIs of the VF network interface card 1 and the VF network interface card 2. An NPI list configured for a port 10 includes 7 and 8, that is, the NPIs of the VF network interface card 3 and the VF network interface card 4. An NPI list configured for a port 11 of a network device 6 includes 8 and 9, that is, the NPIs of the VF network interface card 5 and the VF network interface card 6. The network device 6 obtains an NPI from a network partition identifier field in a packet header of a packet. When a value of a network partition identifier field of a packet that needs to pass through the port 9 is 7 or 8, the network device 6 allows the packet to pass through. When a value of a network partition identifier field of a packet that needs to pass through the port 9 is not 7 or 8, the network device 6 discards the packet. This is the same for the port 10. A check manner of the network device 6 is similar, and details are not described herein again.

A source network interface card that sends a packet adds an NPI configured for the source network interface card to the packet. A destination network interface card that receives the packet compares whether the NPI in the packet is consistent with an NPI configured for the destination network interface card. The packet is allowed to pass through when the NPI in the packet is consistent with the NPI configured for the destination network interface card. The packet is discarded when the NPI in the packet is inconsistent with the NPI configured for the destination network interface card. In this way, traffic in a same network partition is forwarded, and traffic between different network partitions is isolated. The network interface cards perform simple operations to implement network isolation. A network device does not need to perform complex isolation operations such as tunnel matching, adding a tunnel encapsulation header to the packet, and removing the tunnel encapsulation header due to network isolation, and the network device does not need to implement isolation functions such as a firewall. This can reduce hardware complexity of the network device, and improve forwarding performance of the network device.

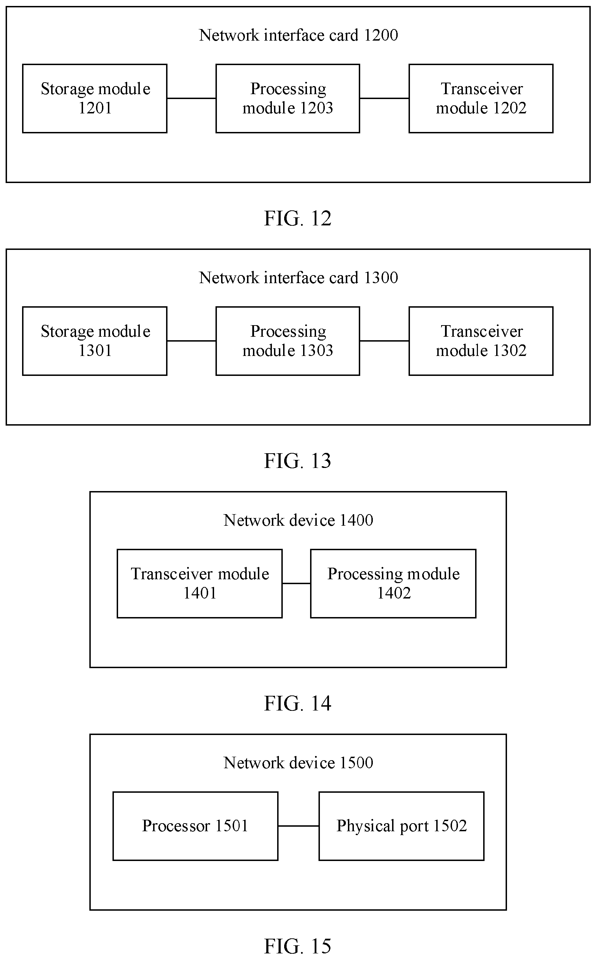

This application further provides a network interface card, configured to implement functions of the destination network interface card in the foregoing network isolation system and the foregoing network isolation method. FIG. 12 is a diagram of a structure of an embodiment of a network interface card according to this application. A network interface card 1200 described in this embodiment is a network interface card that implements packet receiving and sending and first NPI removal processing based on a physical resource of a physical network interface card. The network interface card 1200 includes a storage module 1201, a transceiver module 1202, and a processing module 1203.

The storage module 1201 is configured to store a second network partition identifier configured for the network interface card.

The transceiver module 1202 is configured to receive a target packet forwarded by a network device in an IP network, where the target packet includes a single-layer packet header, the packet header includes a first NPI added by a network interface card that sends the target packet, and the first NPI is an NPI configured for the network interface card that sends the target packet.

The processing module 1203 is configured to: obtain the first NPI in the packet header, and discard the target packet when the first NPI is different from the second NPI.

In a possible implementation, the first NPI and the second NPI are invisible to an end device connected to the transceiver module 1202.

In a possible implementation, the processing module 1203 is further configured to remove the first NPI from the packet header of the target packet when the first NPI is the same as the second NPI. The transceiver module 1202 is further configured to send, to the end device connected to the transceiver module 1202, the target packet from which the first NPI is removed.

In a possible implementation, the transceiver module 1202 is further configured to receive a second control message from a second edge network device in the network device, where the second edge network device is a device connected to the transceiver module 1202, the second control message includes the second NPI, and the second control message is generated after the second edge network device receives the second NPI from a network management device. The processing module 1203 is further configured to configure the second NPI based on the second control message.

In a possible implementation, the network interface card is a physical network interface card, and the end device connected to the network interface card is a physical machine; or the network interface card is a VF network interface card or a PF network interface card that is directly connected to the end device, and the end device is a virtual machine or a container.

It may be understood that the processing module 1203 in this embodiment does not only perform the foregoing processing on a target packet from another network interface card. For to-be-sent data from the end device connected to the network interface card 1200, the processing module 1203 may also process the to-be-sent data, to obtain a packet whose packet header includes the second NPI, and then send the packet to a destination of the packet via the transceiver module 1202 and the network device.

This application further provides a network interface card, configured to implement functions of the source network interface card in the foregoing network isolation system and the foregoing network isolation method. FIG. 13 is a diagram of a structure of an embodiment of a network interface card according to this application. A network interface card 1300 described in this embodiment is a network interface card that implements packet receiving and sending and first NPI addition processing based on a physical resource of a physical network interface card. The network interface card 1300 includes a storage module 1301, a transceiver module 1302, and a processing module 1303.

The storage module 1301 is configured to store a first network partition identifier configured for the network interface card. The processing module 1303 is configured to process to-be-sent data to obtain a target packet, where the target packet includes a single-layer packet header, and the packet header includes the first network partition identifier added by the processing module.

The transceiver module 1302 is configured to send the target packet via a network device in an IP network, so that a network interface card that receives the target packet discards the target packet when a second network partition identifier is different from the first network partition identifier in the packet header of the target packet, where the second network partition identifier is a network partition identifier configured for the network interface card that receives the target packet.

In a possible implementation, the second network partition identifier is located in a link layer header, and the to-be-sent data is non-encapsulated application data. The processing module 1303 is configured to encapsulate, for the to-be-sent data, the packet header including the first network partition identifier, to obtain the target packet.

In a possible implementation, the to-be-sent data includes an original packet header, and the original packet header does not include the first network partition identifier. The processing module 1303 is configured to insert the first network partition identifier into the original packet header, to obtain the target packet.

In a possible implementation, the packet header of the target packet includes the link layer header and an IP network header, and the first network partition identifier is located in the link layer header or the IP network header.

In a possible implementation, the transceiver module 1302 is further configured to receive a control message from an edge network device in the network device, where the edge network device is a network device connected to the transceiver module 1302, the control message includes the first network partition identifier, and the control message is generated after the edge network device receives the first network partition identifier from a network management device. The processing module 1303 is further configured to configure the first network partition identifier based on the control message.

In a possible implementation, the network interface card is a physical network interface card, and an end device connected to the network interface card is a physical machine; or the network interface card is a VF network interface card or a PF network interface card that is directly connected to an end device, and the end device is a virtual machine or a container.

It may be understood that the processing module 1303 in this embodiment does not only perform the foregoing processing on the to-be-sent data. For a packet forwarded by the network device, the processing module 1303 may also obtain an NPI in a packet header of the packet, and compare the NPI with the second NPI of the network interface card. The processing module 1303 removes the NPI in the packet and then sends the packet to the end device connected to the network interface card 1300 when the NPI is consistent with the second NPI of the network interface card. The processing module 1303 discards the packet when the NPI is inconsistent with the second NPI of the network interface card.

This application further provides a network device, configured to implement functions of the network device in the foregoing network isolation system and the foregoing network isolation method. FIG. 14 is a diagram of a structure of an embodiment of a network device according to this application. A network device 1400 includes a transceiver module 1401.

The transceiver module 1401 is configured to receive a target packet sent by a source network interface card, where the target packet is obtained by processing to-be-sent data by the source network interface card, the target packet includes a single-layer packet header, the packet header includes a first network partition identifier added by the source network interface card, and the first network partition identifier is a network partition identifier configured for the source network interface card. The transceiver module 1401 is further configured to forward the target packet to a destination network interface card based on destination address information in the packet header, where the network device reserves the first network partition identifier in the packet header when forwarding the target packet, so that the destination network interface card obtains the first network partition identifier from the packet header after receiving the target packet and discards the target packet when the first network partition identifier is different from a second network partition identifier, where the second network partition identifier is a network partition identifier configured for the destination network interface card.

In a possible implementation, the first network partition identifier is not used for forwarding of the target packet.

In a possible implementation, the network device 1400 is a first edge network device connected to the source network interface card, and the first edge network device further includes a processing module 1402. The processing module 1402 is configured to obtain the first network partition identifier from a network management device. The processing module 1402 is configured to generate a first control message based on the first network partition identifier, where the first control message includes the first network partition identifier. The transceiver module 1401 is configured to send the first control message to the source network interface card, so that the source network interface card configures the first network partition identifier based on the first control message.

In a possible implementation, the network device 1400 is a second edge network device connected to the destination network interface card, and the second edge network device further includes a processing module 1402. The processing module 1402 is configured to obtain the first network partition identifier from a network management device. The processing module is configured to generate a second control message based on the second network partition identifier, where the second control message includes the second network partition identifier. The transceiver module 1401 is configured to send the second control message to the source network interface card, so that the destination network interface card configures the second network partition identifier based on the second control message.

In a possible implementation, neither the first control message nor the second control message includes an IP address.

In a possible implementation, the network device 1400 is the first edge network device connected to the source network interface card, and the first edge network device further includes the processing module 1402. The processing module 1402 is configured to obtain the first network partition identifier in the packet header. The processing module 1402 is configured to: allow the transceiver module 1401 to forward the target packet to the destination network interface card when the first network partition identifier is a network partition identifier allowed to pass through, or discard the target packet when the first network partition identifier is not a network partition identifier allowed to pass through.

In a possible implementation, the network device 1400 is the second edge network device connected to the destination network interface card, and the second edge network device further includes the processing module 1402. The processing module 1402 is configured to obtain the first network partition identifier in the packet header. The processing module 1402 is configured to: allow the transceiver module 1401 to forward the target packet to the destination network interface card when the first network partition identifier is a network partition identifier allowed to pass through, or discard the target packet when the first network partition identifier is not a network partition identifier allowed to pass through.

In a possible implementation, the packet header includes a link layer header and an IP network header, and the first network partition identifier is located in the link layer header or the IP network header.

FIG. 15 is a diagram of a structure of another embodiment of a network device according to this application. A network device 1500 includes a processor 1501 and a physical port 1502. The processor 1501 is connected to the physical port 1502, the physical port 1502 is configured to receive and send a target packet, and the processor 1501 is configured to execute instructions, so that the network device performs an operation of the network device in the foregoing network isolation method.

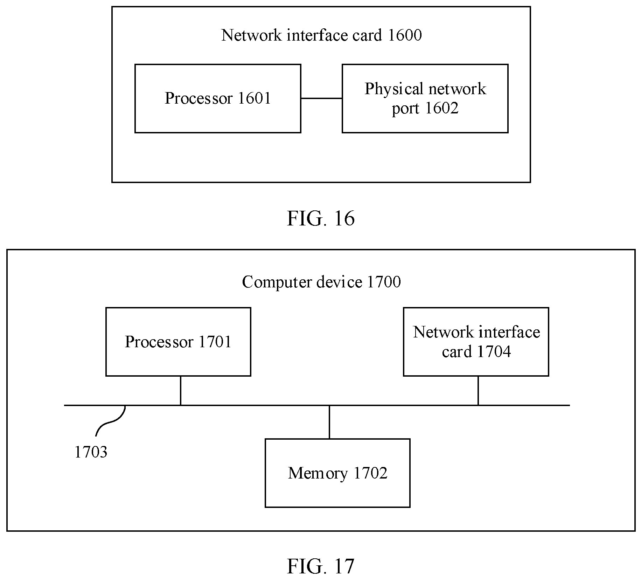

FIG. 16 is a diagram of a structure of another embodiment of a network interface card according to this application. A network interface card 1600 includes a processor 1601 and a physical network port 1602. The processor 1601 is connected to the physical network port 1602, the physical network port 1602 is configured to receive and send a target packet, and the processor 1601 is configured to perform an operation of the destination network interface card or the source network interface card in the foregoing network isolation method.

FIG. 17 is a diagram of a structure of an embodiment of a computer device according to this application. A computer device 1700 includes a processor 1701, a memory 1702, a communication bus 1703, and a network interface card 1704. The processor 1701, the memory 1702, and the network interface card 1704 are connected to each other through the communication bus 1703.

When a network isolation object is the computer device 1700, that is, a physical machine, the network interface card 1704 is a physical network interface card. The network interface card 1704 is configured with an NPI. After obtaining to-be-sent data from the computer device 1700, the network interface card 1704 processes the to-be-sent data, to obtain a target packet whose packet header includes the NPI of the network interface card. The network interface card sends the target packet to a destination device of the target packet via a network device in an IP network. Therefore, a destination network interface card connected to the destination device can discard the target packet when the NPI in the target packet is inconsistent with an NPI configured for the destination network interface card. This implements end-to-end network isolation. Similarly, when receiving a target packet from another end device, the network interface card 1704 obtains an NPI from a packet header of the target packet, compares the NPI in the packet header with an NPI configured for the network interface card 1704, and discards the target packet when the NPI in the packet header is inconsistent with the NPI configured for the network interface card 1704, to isolate abnormal traffic and isolate data flows in different network partitions. The network interface card 1704 removes the NPI from the packet header and then sends the target packet to an upper layer of the computer device 1700 when the NPI in the packet header is consistent with the NPI configured for the network interface card 1704, to prevent the NPI from being exposed to a tenant. This prevents NPI leakage from affecting security of network isolation.

When network isolation objects are virtual machines or containers virtualized in the computer device 1700, the network interface card 1704 may be virtualized into a plurality of VF network interface cards and PF network interface cards, and directly connect the plurality of VF network interface card and the PF network interface cards to the virtual machines or the containers. NPIs are configured for the VF network interface cards/PF network interface cards to isolate networks of the directly connected virtual machines or containers. For a network isolation method implemented based on an NPI, refer to the foregoing descriptions, and details are not described herein again.

Therefore, in this solution, end-to-end network isolation can simplify an isolation operation, reduce a packet processing delay and a network transmission delay, and have better forwarding performance while ensuring security and reliability of network isolation. Compared with a solution in which network isolation is implemented by encapsulating a tunnel encapsulation header used for network isolation, this solution can further save a network bandwidth.

This application further provides a computer-readable storage medium. The computer-readable storage medium stores a computer program. When the computer program is executed by a network interface card, related operations of the network interface card in the network isolation method in any one of the foregoing method embodiments are implemented.

This application further provides a computer-readable storage medium. The computer-readable storage medium stores a computer program. When the computer program is executed by a network device, related operations of the network device in the network isolation method in any one of the foregoing method embodiments are implemented.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, all functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, all of the technical solutions of this application or the part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (ROM, read-only memory), a random access memory (RAM, random access memory), a magnetic disk, or an optical disc.

## Claims

1. A network isolation system, wherein the system comprises a source network interface card connected to a source device, a destination network interface card connected to a destination device, and a network device; and the source network interface card and the destination network interface card are connected over an internet protocol IP network, and the network device is a device in the IP network;
the source network interface card is configured to process to-be-sent data to obtain a target packet, wherein the target packet comprises a single-layer packet header, the packet header comprises a first network partition identifier added by the source network interface card, and the first network partition identifier is a network partition identifier configured for the source network interface card;
the source network interface card is further configured to send the target packet to the destination network interface card via the network device;
the network device is configured to forward the target packet to the destination network interface card based on address information in the packet header; and
the destination network interface card is configured to: obtain the first network partition identifier in the packet header after receiving the target packet, and discard the target packet when the first network partition identifier is different from a second network partition identifier, wherein the second network partition identifier is a network partition identifier configured for the destination network interface card.

2. The system according to claim 1, wherein the to-be-sent data is non-encapsulated application data; and
the source network interface card is configured to encapsulate, for the to-be-sent data, the packet header comprising the first network partition identifier, to obtain the target packet.

3. The system according to claim 1, wherein the to-be-sent data comprises an original packet header, and the original packet header does not comprise the first network partition identifier; and
the source network interface card is configured to insert the first network partition identifier into the original packet header, to obtain the target packet.

4. The system according to any one of claims 1 to 3, wherein the packet header comprises a link layer header and an IP network header, and the first network partition identifier is located in the link layer header or the IP network header.

5. The system according to any one of claims 1 to 4, wherein the first network partition identifier is not used for forwarding of the target packet.

6. The system according to any one of claims 1 to 5, wherein the first network partition identifier and the second network partition identifier are invisible to the source device and the destination device.

7. The system according to any one of claims 1 to 6, wherein the system further comprises a network management device, and the network device comprises a first edge network device connected to the source network interface card and a second edge network device connected to the destination network interface card;
the network management device is specifically configured to: send the first network partition identifier to the first edge network device, and send the second network partition identifier to the second edge network device;
the first edge network device is configured to send a first control message to the source network interface card, wherein the first control message comprises the first network partition identifier;
the second edge network device is configured to send a second control message to the destination network interface card, wherein the second control message comprises the second network partition identifier;
the source network interface card is further configured to configure the first network partition identifier based on the first control message; and
the destination network interface card is further configured to configure the second network partition identifier based on the second control message.

8. The system according to claim 7, wherein neither the first control message nor the second control message comprises an IP address.

9. The system according to any one of claims 1 to 7, wherein
the destination network interface card is further configured to remove the first network partition identifier from the target packet when the first network partition identifier is the same as the second network partition identifier; and
the destination network interface card is further configured to send, to the destination device, the target packet from which the first network partition identifier is removed.

10. The system according to any one of claims 1 to 8, wherein the network device comprises the second edge network device, and a first port of the second edge network device is connected to the destination network interface card;
the second edge network device is configured to: receive the target packet, and obtain the first network partition identifier in the packet header; and
the second edge network device is further configured to: forward the target packet to the destination network interface card through the first port when the first network partition identifier is a network partition identifier allowed to pass through the first port, or discard the target packet when the first network partition identifier is not a network partition identifier allowed to pass through the first port.

11. The system according to any one of claims 1 to 9, wherein the network device comprises the first edge network device, and a second port of the first edge network device is connected to the source network interface card;
the first edge network device is configured to: receive the target packet, and obtain the first network partition identifier in the packet header; and
the first edge network device is further configured to: forward the target packet to the destination network interface card when the first network partition identifier is a network partition identifier allowed to pass through the second port, or discard the target packet when the first network partition identifier is not a network partition identifier allowed to pass through the second port.

12. The system according to any one of claims 1 to 10, wherein the source device is a physical machine, and the source network interface card is a physical network interface card; or the source device is a virtual device, and the source network interface card is a virtual function VF network interface card or a physical function PF network interface card that is directly connected to the virtual device, wherein the virtual device is a virtual machine or a container; and
the destination device is a physical machine, and the destination network interface card is a physical network interface card; or the destination device is a virtual device, and the destination network interface card is a VF network interface card or a PF network interface card that is directly connected to the virtual device.

13. A network interface card, wherein the network interface card comprises:
a storage module, configured to store a second network partition identifier configured for the network interface card;
a transceiver module, configured to receive a target packet forwarded by a network device in an IP network, wherein the target packet comprises a single-layer packet header, the packet header comprises a first network partition identifier added by a network interface card that sends the target packet, and the first network partition identifier is a network partition identifier configured for the network interface card that sends the target packet; and
a processing module, configured to: obtain the first network partition identifier in the packet header, and discard the target packet when the first network partition identifier is different from the second network partition identifier.

14. The network interface card according to claim 13, wherein the first network partition identifier and the second network partition identifier are invisible to an end device connected to the transceiver module.

15. The network interface card according to claim 13 or 14, wherein
the processing module is further configured to remove the first network partition identifier from the packet header of the target packet when the first network partition identifier is the same as the second network partition identifier; and
the transceiver module is further configured to send, to the end device connected to the transceiver module, the target packet from which the first network partition identifier is removed.

16. The network interface card according to any one of claims 13 to 15, wherein
the transceiver module is further configured to receive a second control message from a second edge network device in the network device, wherein the second edge network device is a network device connected to the transceiver module, the second control message comprises the second network partition identifier, and the second control message is generated after the second edge network device receives the second network partition identifier from a network management device; and
the processing module is further configured to configure the second network partition identifier based on the second control message.

17. The network interface card according to any one of claims 13 to 16, wherein
the network interface card is a physical network interface card, and the end device connected to the network interface card is a physical machine; or
the network interface card is a VF network interface card or a PF network interface card that is directly connected to the end device, and the end device is a virtual machine or a container.

18. The network interface card according to any one of claims 13 to 17, wherein the packet header of the target packet comprises a link layer header and an IP network header, and the first network partition identifier is located in the link layer header or the IP network header.

19. A network interface card, wherein the network interface card comprises:
a storage module, configured to store a first network partition identifier configured for the network interface card;
a processing module, configured to process to-be-sent data to obtain a target packet, wherein the target packet comprises a single-layer packet header, and the packet header comprises the first network partition identifier added by the processing module; and
a transceiver module, configured to send the target packet via a network device in an IP network, so that a network interface card that receives the target packet discards the target packet when a second network partition identifier is different from the first network partition identifier in the packet header, wherein the second network partition identifier is a network partition identifier configured for the network interface card that receives the target packet.

20. The network interface card according to claim 19, wherein the to-be-sent data is non-encapsulated application data; and
the processing module is configured to encapsulate, for the to-be-sent data, the packet header comprising the first network partition identifier, to obtain the target packet.

21. The network interface card according to claim 19, wherein the to-be-sent data comprises an original packet header, and the original packet header does not comprise the first network partition identifier; and
the processing module is configured to insert the first network partition identifier into the original packet header, to obtain the target packet.

22. The network interface card according to any one of claims 19 to 21, wherein the packet header of the target packet comprises a link layer header and an IP network header, and the first network partition identifier is located in the link layer header or the IP network header.

23. The network interface card according to any one of claims 19 to 22, wherein
the transceiver module is further configured to receive a control message from an edge network device in the network device, wherein the edge network device is a network device connected to the transceiver module, the control message comprises the first network partition identifier, and the control message is generated after the edge network device receives the first network partition identifier from a network management device; and
the processing module is further configured to configure the first network partition identifier based on the control message.

24. A network isolation method, wherein the method comprises:
receiving, by a destination network interface card, a target packet forwarded by a network device in an IP network, wherein the target packet is obtained by processing to-be-sent data by a source network interface card, the target packet comprises a single-layer packet header, the packet header comprises a first network partition identifier added by the source network interface card, and the first network partition identifier is a network partition identifier configured for the source network interface card;
obtaining, by the destination network interface card, the first network partition identifier in the packet header; and
discarding, by the destination network interface card, the target packet when the first network partition identifier is different from a second network partition identifier, wherein the second network partition identifier is a network partition identifier configured for the destination network interface card.

25. The method according to claim 24, wherein the packet header comprises a link layer header and an IP network header, and the first network partition identifier is located in the link layer header or the IP network header.

26. The method according to claim 24 or 25, wherein the first network partition identifier and the second network partition identifier are invisible to a source device and a destination device, the source device is an end device connected to the source network interface card, and the destination device is an end device connected to the destination network interface card.

27. The method according to any one of claims 24 to 26, wherein
the destination network interface card receives a second control message from a second edge network device in the network device, wherein the second edge network device is a device connected to the destination network interface card, the second control message comprises the second network partition identifier, and the second control message is generated after the second edge network device receives the second network partition identifier from a network management device; and
the destination network interface card completes configuration of the second network partition identifier based on the second control message.

28. The method according to claim 27, wherein the second control message does not comprise an IP address.

29. The method according to any one of claims 24 to 28, wherein
the destination network interface card removes the first network partition identifier from the target packet when the first network partition identifier is the same as the second network partition identifier; and
the destination network interface card sends, to the destination device connected to the destination network interface card, the target packet from which the first network partition identifier is removed.

30. The method according to any one of claims 24 to 29, wherein the destination network interface card is a physical network interface card, and the destination device connected to the destination network interface card is a physical machine; or
the destination network interface card is a VF network interface card or a PF network interface card that is directly connected to the destination device, and the destination device is a virtual machine or a container.

31. A network isolation method, wherein the method comprises:
processing, by a source network interface card, to-be-sent data to obtain a target packet, wherein the target packet comprises a single-layer packet header, the packet header comprises a first network partition identifier added by the source network interface card, and the first network partition identifier is a network partition identifier configured for the source network interface card; and
sending, by the source network interface card, the target packet to a destination network interface card via a network device in an IP network, so that the destination network interface card obtains the first network partition identifier in the packet header after receiving the target packet, and discards the target packet when the first network partition identifier is different from a second network partition identifier, wherein the second network partition identifier is a network partition identifier configured for the destination network interface card.

32. The method according to claim 31, wherein the to-be-sent data is non-encapsulated application data; and
the source network interface card encapsulates, for the to-be-sent data, the packet header comprising the first network partition identifier, to obtain the target packet.

33. The method according to claim 31, wherein the to-be-sent data comprises an original packet header, and the original packet header does not comprise the first network partition identifier; and
the source network interface card is configured to insert the first network partition identifier into the original packet header, to obtain the target packet.

34. The method according to any one of claims 31 to 33, wherein the packet header comprises a link layer header and an IP network header, and the first network partition identifier is located in the link layer header or the IP network header.

35. The method according to any one of claims 31 to 34, wherein the first network partition identifier and the second network partition identifier are invisible to a source device and a destination device, the source device is an end device connected to the source network interface card, and the destination device is an end device connected to the destination network interface card.

36. The method according to any one of claims 31 to 35, wherein
the source network interface card receives a first control message from a first edge network device in the network device, wherein the first edge network device is a device connected to the source network interface card, the first control message comprises the first network partition identifier, and the first control message is generated after the first edge network device receives the first network partition identifier from a network management device; and
the source network interface card completes configuration of the first network partition identifier based on the first control message.

37. The method according to claim 36, wherein the first control message does not comprise an IP address.

38. The method according to any one of claims 31 to 37, wherein the source network interface card is a physical network interface card, and the source device connected to the source network interface card is a physical machine; or the source device is a virtual device, and the source network interface card is a VF network interface card or a PF network interface card that is directly connected to the virtual device, wherein the virtual device is a virtual machine or a container.

39. A network isolation method, wherein the method comprises:
receiving, by a network device, a target packet sent by a source network interface card, wherein the target packet is obtained by processing to-be-sent data by the source network interface card, the target packet comprises a single-layer packet header, the packet header comprises a first network partition identifier added by the source network interface card, the first network partition identifier is a network partition identifier configured for the source network interface card, and the network device is a device in an IP network; and
forwarding, by the network device, the target packet to a destination network interface card based on destination address information in the packet header, wherein the network device reserves the first network partition identifier in the packet header when forwarding the target packet, so that the destination network interface card obtains the first network partition identifier from the packet header after receiving the target packet and discards the target packet when the first network partition identifier is different from a second network partition identifier, wherein the second network partition identifier is a network partition identifier configured for the destination network interface card.

40. The method according to claim 39, wherein the first network partition identifier is not used for forwarding of the target packet.

41. The method according to claim 39 or 40, wherein the packet header comprises a link layer header and an IP network header, and the first network partition identifier is located in the link layer header or the IP network header.

42. The method according to claims 39 to 41, wherein the network device comprises a first edge network device connected to the source network interface card and a second edge network device connected to the destination network interface card; and the method further comprises:
obtaining, by the first edge network device, the first network partition identifier from a network management device;
sending, by the first edge network device, a first control message to the source network interface card, wherein the first control message comprises the first network partition identifier, so that the source network interface card configures the first network partition identifier based on the first control message;
obtaining, by the second edge network device, the second network partition identifier from the network management device; and
sending, by the second edge network device, a second control message to the destination network interface card, wherein the second control message comprises the second network partition identifier, so that the destination network interface card configures the second network partition identifier based on the second control message.

43. The method according to claim 42, wherein neither the first control message nor the second control message comprises an IP address.

44. The method according to any one of claims 39 to 43, wherein the network device comprises the second edge network device connected to the destination network interface card, and a first port of the second edge network device is connected to the destination network interface card; and the method further comprises:
receiving, by the second edge network device, the target packet, and obtaining the first network partition identifier in the packet header; and
forwarding, by the second edge network device, the target packet to the destination network interface card through the first port when the first network partition identifier is a network partition identifier allowed to pass through the first port, or discarding the target packet when the first network partition identifier is not a network partition identifier allowed to pass through the first port.

45. The method according to any one of claims 39 to 44, wherein the network device comprises the first edge network device connected to the source network interface card, and a second port of the first edge network device is connected to the source network interface card; and the method further comprises:
receiving, by the first edge network device, the target packet, and obtaining the first network partition identifier in the packet header; and
forwarding, by the first edge network device, the target packet to the destination network interface card when the first network partition identifier is a network partition identifier allowed to pass through the second port, or discarding the target packet when the first network partition identifier is not a network partition identifier allowed to pass through the second port.

46. A network isolation method, wherein the method comprises:
processing, by a source network interface card, to-be-sent data to obtain a target packet, wherein the target packet comprises a single-layer packet header, the packet header comprises a first network partition identifier added by the source network interface card, and the first network partition identifier is a network partition identifier configured for the source network interface card;
sending, by the source network interface card, the target packet to a destination network interface card via a network device in an IP network;
forwarding, by the network device, the target packet to the destination network interface card; and
obtaining, by the destination network interface card, the first network partition identifier in the packet header after receiving the target packet, and discarding the target packet when the first network partition identifier is different from a second network partition identifier, wherein the second network partition identifier is a network partition identifier configured for the destination network interface card.

47. A network device, wherein the network device is a device in an IP network, and the network device comprises:
a transceiver module, configured to receive a target packet sent by a source network interface card, wherein the target packet is obtained by processing to-be-sent data by the source network interface card, the target packet comprises a single-layer packet header, the packet header comprises a first network partition identifier added by the source network interface card, and the first network partition identifier is a network partition identifier configured for the source network interface card, wherein
the transceiver module is further configured to forward the target packet to a destination network interface card based on destination address information in the packet header, wherein the network device reserves the first network partition identifier in the packet header when forwarding the target packet, so that the destination network interface card obtains the first network partition identifier from the packet header after receiving the target packet and discards the target packet when the first network partition identifier is different from a second network partition identifier, wherein the second network partition identifier is a network partition identifier configured for the destination network interface card.

48. The network device according to claim 47, wherein the first network partition identifier is not used for forwarding of the target packet.

49. The network device according to claim 47 or 48, wherein the packet header comprises a link layer header and an IP network header, and the first network partition identifier is located in the link layer header or the IP network header.

50. The network device according to claims 47 to 49, wherein the network device is a first edge network device connected to the source network interface card, and the first edge network device further comprises a processing module;
the processing module is configured to obtain the first network partition identifier from a network management device;
the processing module is configured to generate a first control message based on the first network partition identifier, wherein the first control message comprises the first network partition identifier; and
the transceiver module is configured to send the first control message to the source network interface card, so that the source network interface card configures the first network partition identifier based on the first control message.

51. The network device according to claims 47 to 49, wherein the network device is a second edge network device connected to the destination network interface card, and the second edge network device further comprises a processing module;
the processing module is configured to obtain the first network partition identifier from a network management device;
the processing module is configured to generate a second control message based on the second network partition identifier, wherein the second control message comprises the second network partition identifier; and
the transceiver module is configured to send the second control message to the source network interface card, so that the destination network interface card configures the second network partition identifier based on the second control message.

52. The network device according to claim 50 or 51, wherein neither the first control message nor the second control message comprises an IP address.

53. The network device according to any one of claims 47 to 50, wherein the network device is the first edge network device connected to the source network interface card, and the first edge network device further comprises the processing module;
the processing module is configured to obtain the first network partition identifier in the packet header; and
the processing module is configured to: allow the transceiver module to forward the target packet to the destination network interface card when the first network partition identifier is a network partition identifier allowed to pass through, or discard the target packet when the first network partition identifier is not a network partition identifier allowed to pass through.

54. The network device according to any one of claims 47 to 49 and 51, wherein the network device is the second edge network device connected to the destination network interface card, and the second edge network device further comprises the processing module;
the processing module is configured to obtain the first network partition identifier in the packet header; and
the processing module is configured to: allow the transceiver module to forward the target packet to the destination network interface card when the first network partition identifier is a network partition identifier allowed to pass through, or discard the target packet when the first network partition identifier is not a network partition identifier allowed to pass through.

55. A network device, wherein the network device is a device in an IP network, the network device comprises a processor and a physical port, the processor is connected to the physical port, the physical port is configured to receive and send a target packet, and the processor is configured to execute instructions, so that the network device performs the method according to any one of claims 39 to 45.

56. A network interface card, wherein the network interface card comprises a processor and a physical network port, the processor is connected to the physical network port, the physical network port is configured to receive and send a target packet, and the processor is configured to perform the method according to any one of claims 24 to 38.

57. A computer device, wherein the computer device comprises a processor, a memory, a communication bus, and the network interface card according to any one of claims 13 to 23 and 56, and the processor, the memory, and the network interface card are connected to each other through the communication bus.

58. A structure of a packet, wherein the structure of the packet comprises a single-layer packet header and a payload, and the packet header comprises a link layer header and an IP network header, wherein
the link layer header or the IP network header comprises a network partition identifier field, the network partition identifier field is used to carry a first network partition identifier configured for a source network interface card that sends the packet, and the first network partition identifier is used to discard the packet when a destination network interface card that receives the packet determines that the first network partition identifier in the link layer header or the IP network header is different from a second network partition identifier configured for the destination network interface card.

59. The structure of the packet according to claim 58, wherein the first network partition identifier is further used to allow the packet to pass through when the destination network interface card determines that the first network partition identifier in the link layer header or the IP network header is different from the second network partition identifier.

60. The structure of the packet according to claim 58 or 59, wherein the IP network header is an IPv6 network header, and the network partition identifier field is located in an IPv6 extension header of the IPv6 network header.

61. A computer-readable storage medium, comprising computer program instructions, wherein when the computer program instructions are executed by a network interface card, the network interface card performs the method according to any one of claims 24 to 38.

62. A computer-readable storage medium, comprising computer program instructions, wherein when the computer program instructions are executed by a network device, the network device performs the method according to any one of claims 39 to 45.
